(19) Europäisches Patentamt
European Patent Office
Office européen des brevets

(11) **EP 4 195 147 A2**

(12) **EUROPEAN PATENT APPLICATION**

(43) Date of publication:
**14.06.2023 Bulletin 2023/24**

(21) Application number: **22209262.9**

(22) Date of filing: **24.11.2022**

(51) International Patent Classification (IPC):
**G06T 7/00** *(2017.01)*       **G01N 21/88** *(2006.01)*

(52) Cooperative Patent Classification (CPC):
**G06T 7/001; G01B 11/30; G01N 21/88;
G01N 33/383; G06F 18/22; G06T 7/246;
G06T 7/70;** G01N 2021/1765

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **03.12.2021   JP 2021197279
03.12.2021   JP 2021197278
30.09.2022   JP 2022158764**

(71) Applicant: **CANON KABUSHIKI KAISHA
Tokyo 146-8501 (JP)**

(72) Inventors:
• **MITSUMOTO, Shinichi
Tokyo, 146-8501 (JP)**
• **MAMIYA, Satoru
Tokyo, 146-8501 (JP)**

(74) Representative: **TBK
Bavariaring 4-6
80336 München (DE)**

(54) **INFORMATION PROCESSING APPARATUS, INFORMATION PROCESSING METHOD, SYSTEM, STORAGE MEDIUM AND PROGRAM**

(57)    An information processing apparatus acquires first defect data and second defect data generated on a basis of images imaged of an identical target, obtains a common portion that is common between the first defect data and the second defect data and a different portion that exists in either the first defect data or the second defect data and calculate position data corresponding to a boundary between the common portion and the different portion, and generates state change data indicating a change in a defect included in the common portion and the different portion using the position data.

**F I G.  4**

EP 4 195 147 A2

**Description**

BACKGROUND OF THE INVENTION

Field of the Invention

The present invention relates to techniques for determining a change in the state of a defect.

Description of the Related Art

There are methods for detecting defects such as cracks from images imaged of an inspection target such as a wall surface of a structure and for determining a change in state, such as progression or retraction, of defects from images imaged in different times. The technique described in Japanese Patent Laid-Open No. 2019-211277 compares first defect data generated from a first image and second defect data generated from a second image, the images being imaged in different times, and determines a change in the state of the length, width, or the like of a defect.
However, in Japanese Patent Laid-Open No. 2019-211277, a change in the state, such as the length, width, or the like of the defect, can be confirmed. However, it is not as simple as the shape of a defect simply progressing from its past shape, and in some cases the shape or position of a past defect may change or the like. Thus, defect data that can accurately reproduce portions that have changed from the past defect and portions that have not changed may be unable to be generated.
Also, in Japanese Patent Laid-Open No. 2019-211277, display cannot be switched between a display of a change in the state of a defect when the first defect data is used as reference data and a display of a change in the state of a defect when the second defect data is used as reference data. Thus, the change in the state of the defect cannot be multilaterally comprehended.

SUMMARY OF THE INVENTION

The present invention has been made in consideration of the aforementioned problems, and realizes a technique that can generate defect data enabling a change in the state of a defect to be accurately reproduced.
The present invention also realizes a technique that enables a change in the state of a defect to be multilaterally comprehended.
In order to solve the aforementioned problems, the present invention provides an information processing apparatus as specified in claims 1 to 26.
In order to solve the aforementioned problems, the present invention provides an image processing system specified in claim 27.
In order to solve the aforementioned problems, the present invention provides an image processing method specified in claims 28 or 29.
In order to solve the aforementioned problems, the present invention provides a computer-readable storage medium storing a program that causes a computer to execute the method according to claim 28 or 29.
In order to solve the aforementioned problems, the present invention provides a program that causes a computer to execute the method according to claim 28 or 29.
According to the present invention, defect data that enables a change in the state of a defect to be accurately reproduced can be generated.
According to the present invention, a change in the state of a defect can be multilaterally comprehended.
Further features of the present invention will become apparent from the following description of exemplary embodiments (with reference to the attached drawings).

BRIEF DESCRIPTION OF THE DRAWINGS

FIG. 1 is a block diagram illustrating the hardware configuration of an information processing apparatus according to a present embodiment.
FIGS. 2A and 2B are diagrams illustrating defect data tables according to the present embodiment.
FIGS. 3A and 3B are diagrams illustrating display example of cracks drawn on the basis of defect data according to the present embodiment.
FIG. 4 is a diagram illustrating an example of a UI screen according to the present embodiment.
FIG. 5 is a flowchart illustrating state change determination processing according to the present embodiment.

FIG. 6 is a diagram illustrating a display example of a result of the state change determination processing of FIG. 5.

FIG. 7 is a flowchart illustrating the state change data generation processing of FIG. 5.

FIGS. 8A to 8C are explanatory diagrams of expanding processing of the defect data of FIG. 7.

FIG. 9 is a flowchart illustrating the defect data generation processing of common portions and different portions of FIG. 7.

FIGS. 10A and 10B are diagrams illustrating defect data tables of the common portions and the different portions.

FIGS. 11A to 11C are diagrams illustrating the relationship between the defect data of the common portions and the different portions and an expanded region.

FIG. 12 is a flowchart illustrating corresponding relationship data generation processing.

FIG. 13 is a diagram illustrating a corresponding relationship data table.

FIG. 14 is an explanatory diagram of processing to determine comparison data corresponding to reference data.

FIG. 15 is a diagram illustrating the types of state change data.

FIGS. 16A to 16G are diagrams illustrating display examples of state change data.

FIG. 17 is a flowchart illustrating state change data generation processing of a second embodiment.

FIG. 18 is a flowchart illustrating inspection processing of common portions of FIG. 17.

FIGS. 19A and 19B are diagrams illustrating a score calculation method in the inspection processing of FIG. 18.

FIG. 20 is a diagram illustrating the inspection processing of FIG. 18.

FIGS. 21A to 21C are diagrams illustrating a final determination method of comparison target defect data in the inspection processing of FIG. 18.

## DESCRIPTION OF THE EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

### First Embodiment

In the first embodiment, an example is described in which a computer apparatus operates as an information processing apparatus and determines a change in state, such as progression, retraction, disappearance due to repair, and the like, for a defect detected from images imaged in different times, generates defect data that enables accurate reproduction of the change in the state of the defect, and displays the change in the state of the defect so as to be multilaterally comprehended.

Note that the term defect means a crack or the like in a concrete surface caused by damage, degradation, or the like to a concrete structure, such as a limited-access road, a bridge, a tunnel, a dam, and the like. The term crack means linear damage with a start point, an end point, length, and width that occurs in a wall surface of a structure or the like due to degradation over time, shock from earthquakes, and the like.

### HARDWARE CONFIGURATION

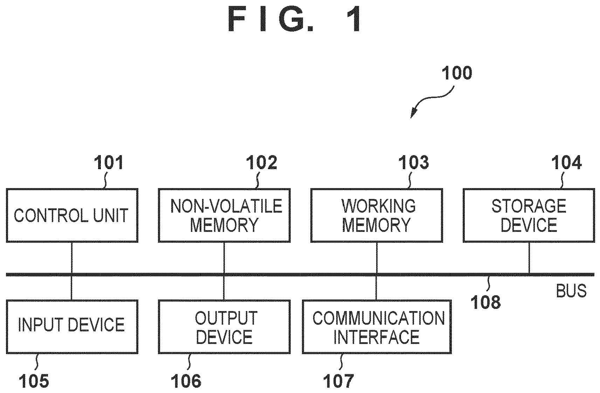

First, the hardware configuration of an information processing apparatus according to the present embodiment will be described with reference to FIG. 1.

FIG. 1 is a block diagram illustrating the hardware configuration of an information processing apparatus 100 according to the present embodiment.

In the present embodiment, a computer apparatus operates as the information processing apparatus 100. Note that the processing of the information processing apparatus according to the present embodiment may be implemented by a single computer apparatus or may be implemented by dividing the functions amongst a plurality of computer apparatuses as necessary. The plurality of computer apparatuses are communicatively connected each other.

The information processing apparatus 100 includes a control unit 101, a non-volatile memory 102, a working memory 103, a storage device 104, an input device 105, an output device 106, a network interface 107, and a system bus 108.

The control unit 101 includes a calculation processing processor, such as a CPU, MPU, or the like, for controlling the entire information processing apparatus 100. The non-volatile memory 102 is a ROM that stores programs and parameters executed by the processor of the control unit 101. Herein, the term program refers to a program for executing the state change determination processing described below. The working memory 103 is a RAM that temporarily stores programs and data supplied from an external apparatus or the like. The storage device 104 is an internal device, such as a hard disk, memory card, or the like built into the information processing apparatus 100 or an external device, such as a hard disk, memory card, or the like, that is detachably connected to the information processing apparatus 100. The storage device 104 includes a memory card, hard disk, or the like configured from a semiconductor memory, a magnetic disk, or the like. Also, the storage device 104 includes a storage medium configured from a disk drive for reading and writing data to/from an optical disk, such as a DVD, Blu-ray Disc (registered trademark), and the like.

The input device 105 is an operation member, such as a mouse, keyboard, touch panel, or the like, for accepting user operations. The input device 105 outputs operation instruction to the control unit 101. The output device 106 is a display apparatus, such as a display, monitor, or the like, configured from an LCD, an organic EL, or the like. The output device 106 displays data possessed by the information processing apparatus 100 and data supplied from the external device. The network interface 107 communicatively connects to a network, such as the Internet, a Local Area Network (LAN), and the like. The system bus 108 includes an address bus, a data bus, and a control bus for connecting components 101 to 107 of the information processing apparatus 100 so as to be capable of transferring and receiving data.

An operating system (OS), which is fundamental software executed by the control unit 101, and applications that cooperate with the OS to implement practical functions are stored in the non-volatile memory 102. Also, in the present embodiment, the non-volatile memory 102 stores an application for the information processing apparatus 100 to implement a state change determination processing described below.

The processing of the information processing apparatus 100 according to the present embodiment is implemented by reading software provided by an application. Note that herein, the application includes software for using the basic function of the OS installed in the information processing apparatus 100. Also, the OS of the information processing apparatus 100 may include software for implementing the processing according to the present embodiment.

Note that the input device 105 and the information processing apparatus 100 may be provided separately, and an information processing system in which the input device 105 and the information processing apparatus are connected each other by wired or wireless may be constructed. In addition, the output device 106 and the information processing equipment 100 may be provided separately, and an information processing system in which the output device 106 and the information processing apparatus 100 are connected each other by wired or wireless may be constructed. In this case, the input device 105 and the output device 106 may be tablet terminals. The input device 105 and the output device may also be the same tablet terminal.

DEFECT DATA TABLE

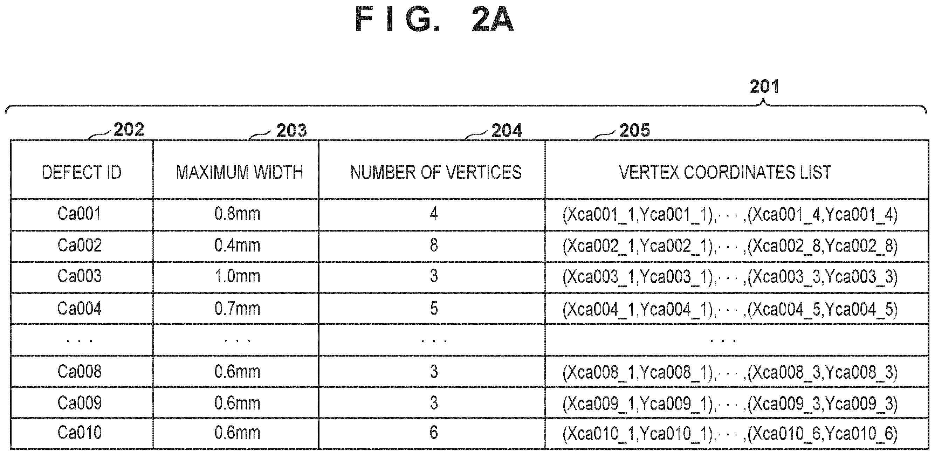

Next, the data structure of a defect data table according to the present embodiment will be described with reference to FIGS. 2A to 4.

In the example of the present embodiment described below, defects are represented as vector data and defects are cracks.

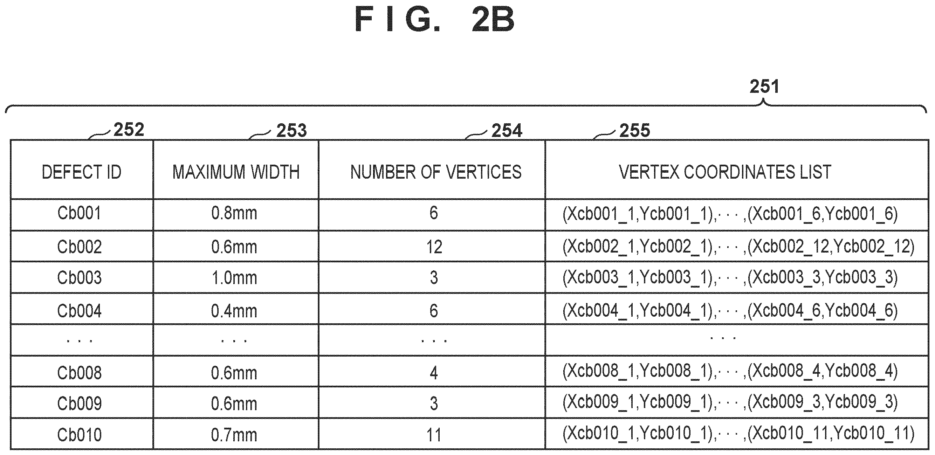

FIG. 2A illustrates a first defect data table 201 in which first defect data generated from an image imaged of an inspection target in a first time is registered. FIG. 2B illustrates a second defect data table 251 in which second defect data generated from an image imaged of the inspection target in a second time after the first time is registered.

The first defect data table 201 and the second defect data table 251 include, as information relating to cracks (defect data), defect ID 202, 252, maximum width 203, 253, number of vertices 204, 254, and vertex coordinates list 205, 255. The defect ID 202, 252 is identification information uniquely allocated to each crack. The maximum width 203, 253 is the maximum value of the width (thickness) of the crack. The number of vertices 204, 254 and the vertex coordinates list 205, 255 correspond to information relating to the number and the coordinates of vertices that correspond to the start points and the end points of line segments when the shape of a crack is represented as a polyline made of one or a plurality of line segments. Note that the defect data tables 201, 251 includes information acquired from images imaged of the inspection target, and each piece of defect data may be input by the user tracing on an image on a tablet or the like, may be automatically generated by image analysis processing or the like, or may be input by a combination thereof. Also, image analysis processing may be executed using a learning model generated via artificial intelligence (AI) machine learning and/or deep learning.

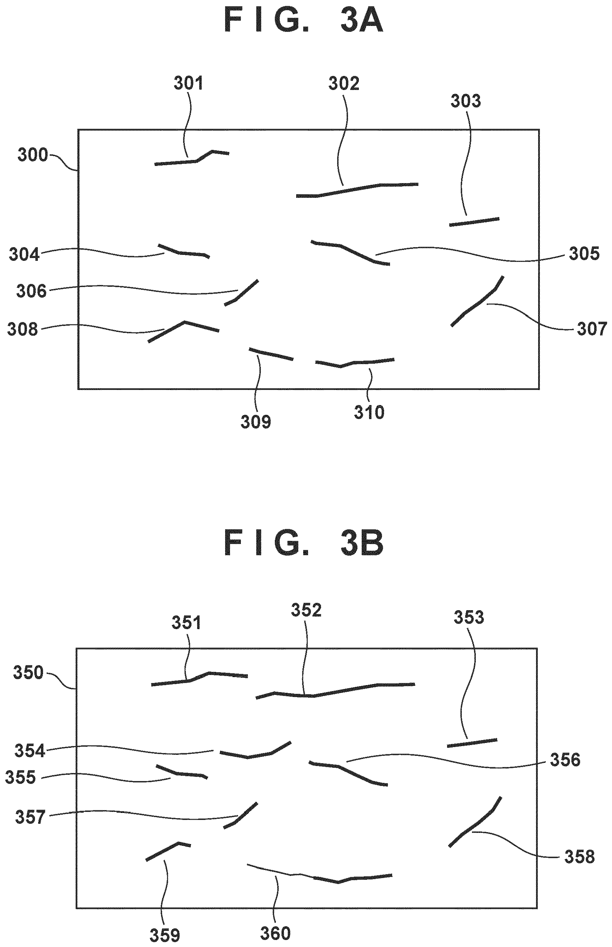

FIG. 3A illustrates a display screen 300 of cracks drawn on the basis of the first defect data registered in the first defect data table 201 illustrated in FIG. 2A. On the display screen 300, a crack 301 is drawn on the basis of the defect data with the defect ID of Ca001 in the first defect data table 201. In a similar manner, cracks 302 to 310 correspond to defect IDs Ca002 to Ca010, respectively.

FIG. 3B illustrates a display screen 350 of cracks drawn on the basis of the second defect data registered in the second defect data table 251 illustrated in FIG. 2B. On the display screen 350, a crack 351 is drawn on the basis of the defect data with the defect ID of Cb001 in the second defect data table 251. In a similar manner, cracks 352 to 360 correspond to defect IDs Cb002 to Cb010, respectively.

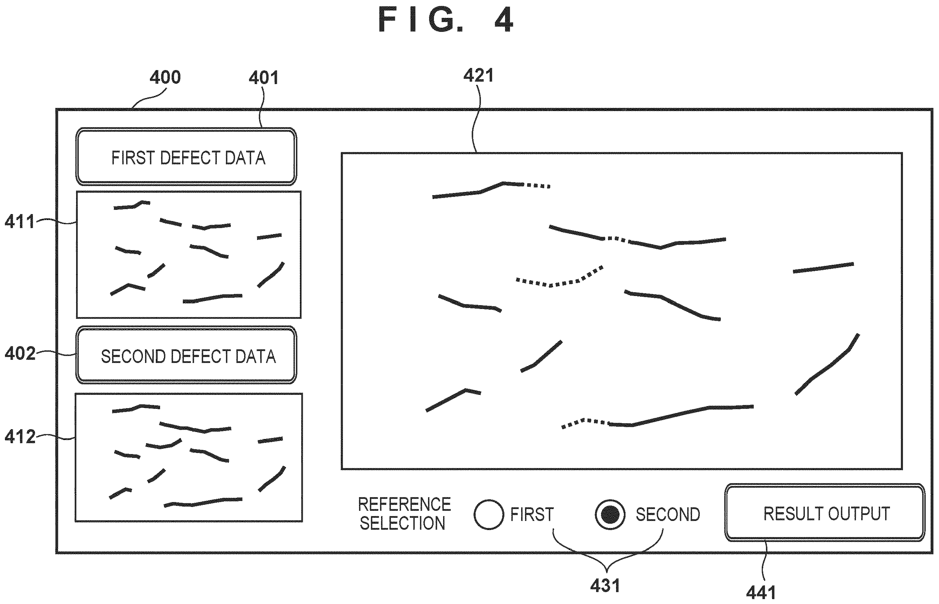

FIG. 4 illustrates a Graphical User Interface (GUI) screen 400 of an application for implementing state change determination processing executed by the information processing apparatus 100 according to the present embodiment.

On the GUI screen 400, a first data input button 401 is a button for selecting the first defect data registered in the first defect data table 201 of FIG. 2A. When the user operates the button 401, a file select dialog (not illustrated) is displayed, and the first defect data of the first defect data table 201 stored in the storage device 104 is selected. A second data input button 402 is a button for selecting the second defect data registered in the second defect data table 251 of FIG. 2B. When the user operates the button 402, a file select dialog (not illustrated) is displayed, and the second defect data of the second defect data table 251 stored in the storage device 104 is selected.

A first defect data display region 411 is a region where the first defect data selected via the first data input button 401 is displayed. The first defect data display region 411 displays the display screen 300 of the first defect data illustrated in FIG. 3Awith the cracks draw on the basis of the first defect data registered in the first defect data table 201 of FIG. 2A. In a similar manner, a second defect data display region 412 is a region where the second defect data selected via the second data input button 402 is displayed. The second defect data display region 412 displays the display screen 350 of the cracks draw on the basis of the second defect data registered in the second defect data table 251 illustrated in FIG. 2B.

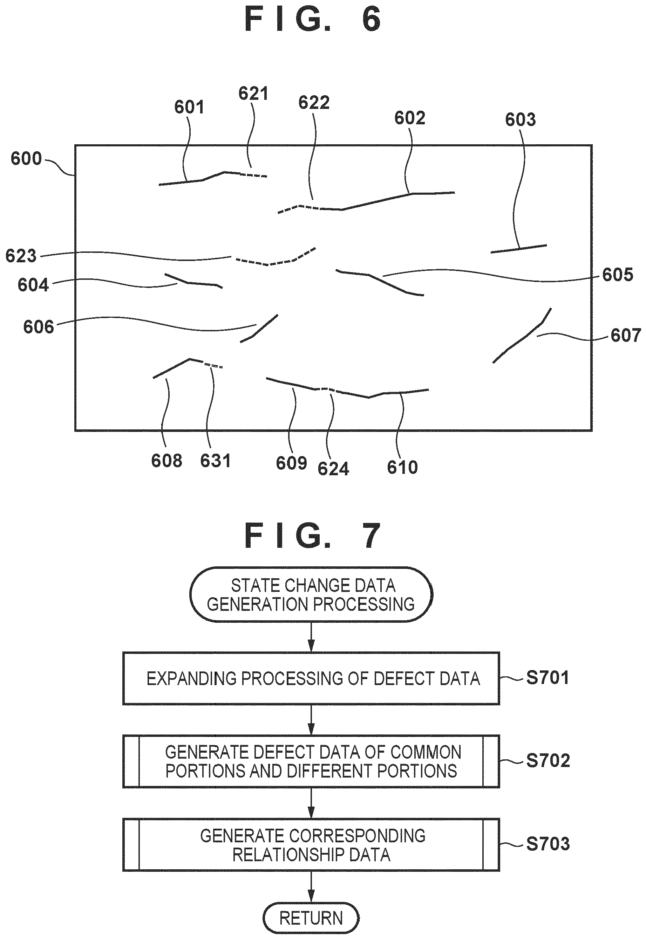

A result display region 421 is a region displaying state change data, which is the state change determination processing result described below using FIG. 6 for the first defect data table 201 of FIG. 2A and the second defect data table 251 of FIG. 2B. A reference select button 431 is a button for selecting defect data as a reference used in the state change determination processing. In the example of FIG. 4, the first defect data and the second defect data are able to be selected. A result output button 441 is a button for outputting the state change determination processing result as a file. The data and file output as the state change determination processing result will be described below.

STATE CHANGE DETERMINATION PROCESSING

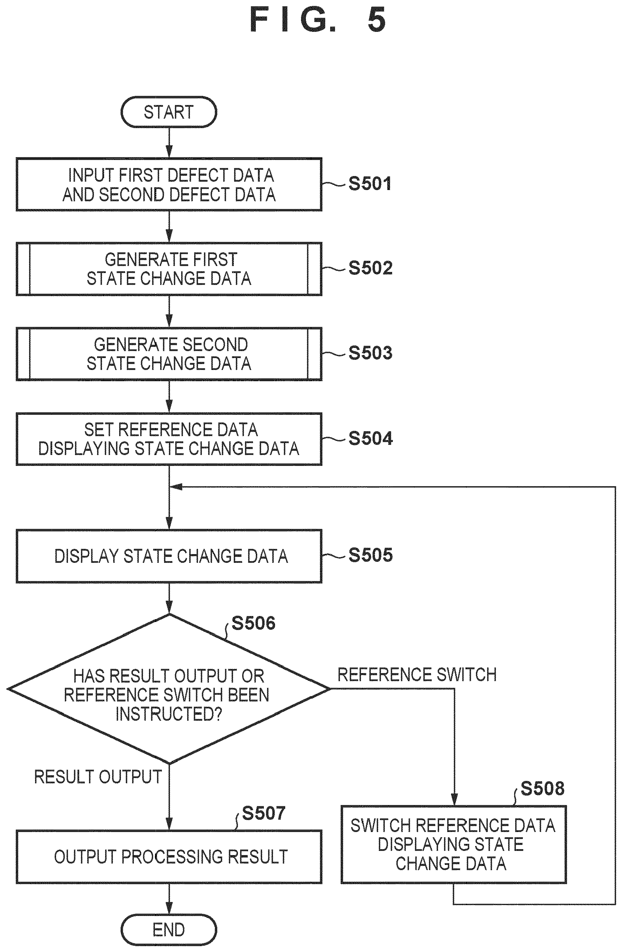

Next, the state change determination processing executed by the information processing apparatus 100 according to the present embodiment will be described with reference to FIGS. 5 and 6.

FIG. 5 is a flowchart illustrating the state change determination processing executed by the information processing apparatus 100 according to the present embodiment.

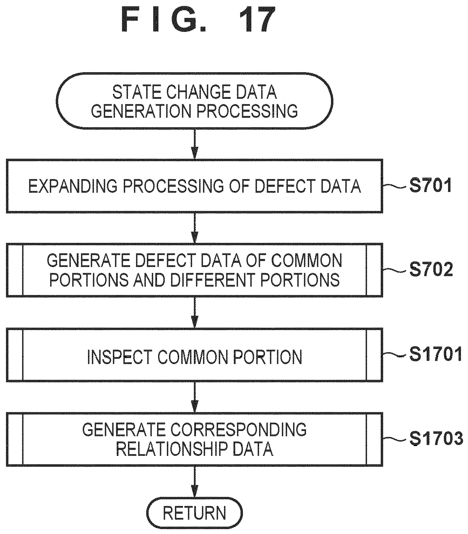

The processing of the FIG. 5 is implemented by the control unit 101 of the information processing apparatus 100 illustrated in FIG. 1 loading a program stored in the non-volatile memory 102 in the working memory 103 and executing the program to control the components. The same applies for FIG. 17 described below.

In the example of the present embodiment described below, the processing includes a past first defect data and a most recent second defect data generated in different times being input, common portions and different portions in the past first defect data and the most recent second defect data being calculated, and the calculated state change data being displayed.

In step S501, the control unit 101 reads out a past first defect data from the first defect data table 201 stored in the storage device 104 and reads out a most recent second defect data from the second defect data table 251.

In step S502, the control unit 101 generates first state change data which is data obtained by comparing the most recent second defect data used as comparison data with the past first defect data input in step S501 used as reference data. The first state change data includes information indicating common portions which are portions determined to exist in both the past first defect data and the most recent second defect data. Also, the first state change data includes information indicating different portions which are portions determined to exist in the past first defect data but not in the most recent second defect data. Furthermore, the first state change data includes information indicating the corresponding relationship between the common portions of the past first defect data and the common portions of the most recent second defect data.

In step S503, the control unit 101 generates second state change data which is data obtained by comparing the past first defect data used as comparison data with the most recent second defect data input in step S501 used as reference data. The second state change data includes information indicating common portions which are portions determined to exist in both the past first defect data and the most recent second defect data. Also, the second state change data includes information indicating different portions which are portions determined to exist in the most recent second defect data but not the past first defect data. Furthermore, the second state change data includes information indicating the corresponding relationship between the common portions of the past first defect data and the common portions of the most recent second defect data.

Information indicating common portions is information of defect portions in the reference data that also exist in the comparison data. Also, information indicating different portions is information of defect portions that exist in the reference data but not in the comparison data. For example, when the comparison data is the past first defect data and the reference data is the most recent second defect data, the information indicating different portions corresponds to newly formed cracks not detected in the past inspection. Also, when the comparison data is the most recent second defect data and the reference data is the past first defect data, the information corresponds to cracks that have disappeared due to repair or the like.

The state change data generation processing of steps S502 and S503 and the data structure will be described below.

In step S504, the control unit 101 sets the state change data generated in steps S502 and S503 as the reference data to be displayed.

In step S505, the control unit 101 displays, in the result display region 421 of FIG. 4, the first state change data generated in step S502 or the second state change data generated in step S503 using the defect data set in step S504 as the reference data. When the reference data set in step S504 is the most recent second defect data, from the second state change data generated in step S503, the common portions in the past first defect data and the most recent second defect data and the different portion that do not exist in the past first defect data are displayed. Also, from the first state change data generated in step S502, the different portions that do not exist in the past first defect data are displayed.

FIG. 6 illustrates a display example of the state change determination processing result in a case where, in step S505 of FIG. 5, the most recent second defect data, which is the state change data displayed in the result display region 421 of FIG. 4, is the reference data and the past first defect data is the comparison data. A display region 600 of FIG. 6 corresponds to the result display region 421 of FIG. 4. Line segments 601 to 610 indicated by solid lines correspond to cracks that are common portions in the time period from the past time period to the most recent time period. Line segments 621 to 624 indicated by broken lines correspond to cracks that have newly formed in the time period from the past time period to the most recent time period and correspond to different portions when the past first defect data is the comparison data and the most recent second defect data is the reference data. A line segment 631 indicated by double lines corresponds to a crack that has disappeared in the time period from the past time period to the most recent time period and correspond to a different portion when the most recent second defect data is the comparison data and the past first defect data is the reference data. Note that in the example of FIG. 6, to identifiably display the three types of defect portions, a solid line, broken line, and double line are used, however these may be distinguished by being drawn in different colors.

In step S506, the control unit 101 determines whether the user operation accepted by the input device 105 is a result output instruction via the result output button 441 of FIG. 4 or a reference switch instruction via the reference select button 431. The control unit 101 proceeds the processing to step S507 when the control unit 101 determines that the user operation accepted by the input device 105 is a result output instruction. The control unit 101 proceeds the processing to step S508 when the control unit 101 determines that the user operation accepted by the input device 105 is a reference switch instruction.

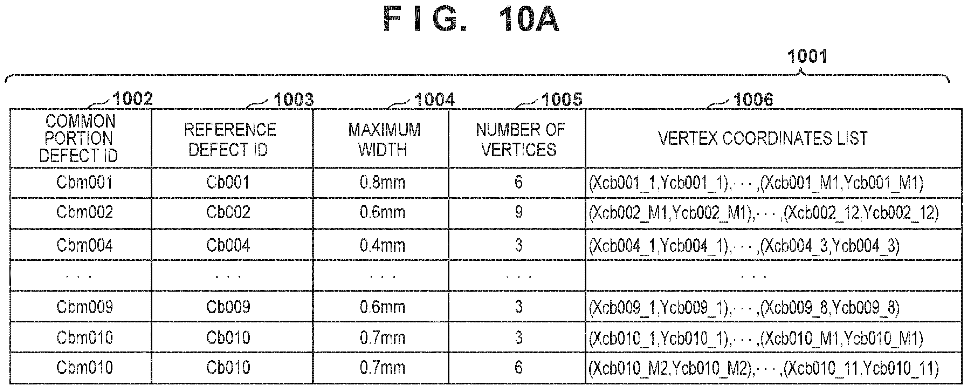

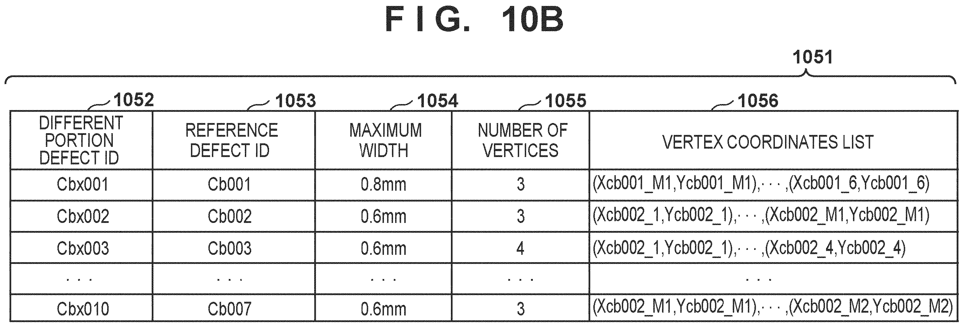

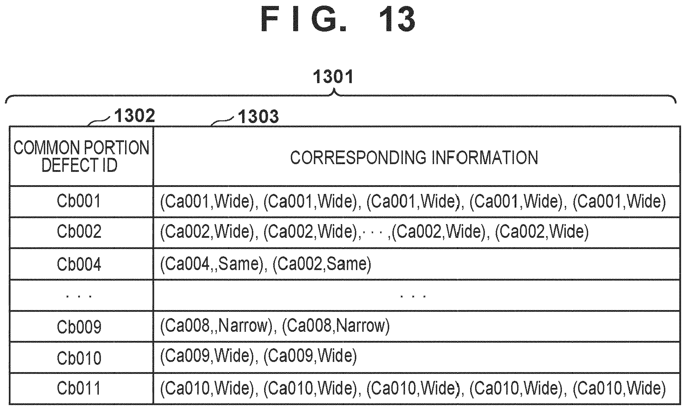

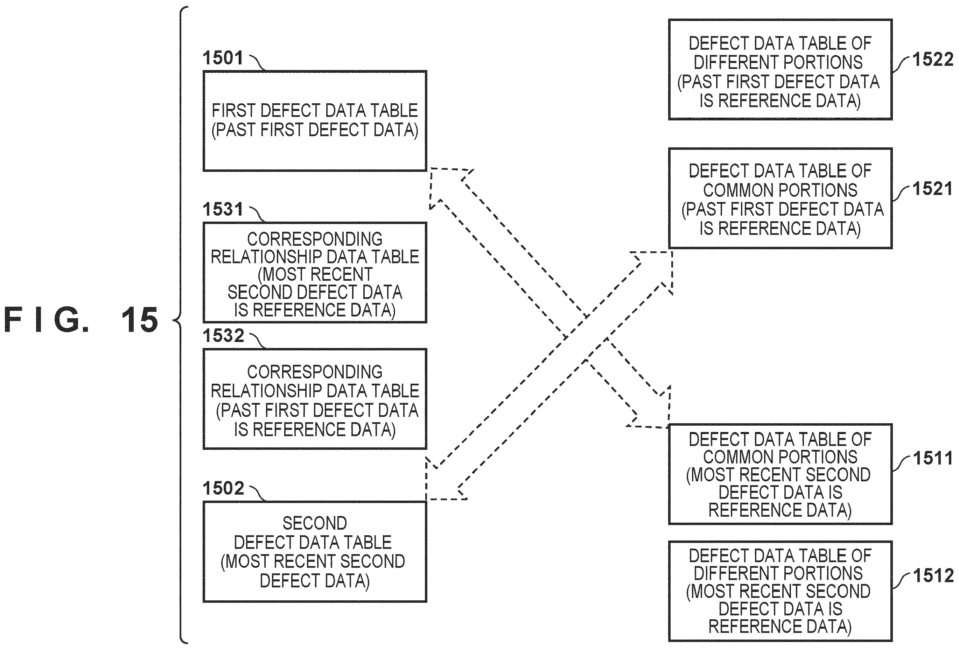

In step S507, the control unit 101 outputs the state change data generated in steps S502 and S503 as a file and ends the processing. As long as the output file format can describe the defect data structure according to the present embodiment, a known format, such as CSV, JSON, XML, and the like, an original format, or a combination thereof may be used. Also, the state change data includes a total of 6 types of data described below using FIG. 15 obtained by generating the three types, common portion defect data (described below using FIG. 10A), different portion data (described below using FIG. 10B), and corresponding relationship data (described below using FIG. 13), for each piece of reference data. Note that when outputting the file in step S507, the data of all six types may be output as one file, two files each including three types of data may be output, three files each including a different type of data may be output, each of the six types of data may be output as a separate file, or any other combination may be used.

In step S508, the control unit 101 switches the defect data to the reference data specified in step S506 and returns the processing to step S505. When the reference data is switched to the past first defect data, in the example of FIG. 6, the line segments indicated by solid lines indicate the past first defect data, or in other words the shape of the cracks detected in the past inspection. Also, the line segments indicated by broken lines indicate the most recent second defect data, or in other words the shape of the cracks newly detected in the most recent inspection. Also, the line segments indicated by the double lines indicate cracks detected in the past inspection that have disappeared in the most recent inspection. In this manner, even when the position of the cracks are different or the shape of the polylines are different between the past first defect data and the most recent second defect data, the cracks that are common portions in the defect data displayed as the reference data and the cracks that are different portions can be accurately comprehended.

Note that in the processing of FIG. 5, instead of steps S501 to S503, an existing state change data file output in step S507 may be read out and converted to a displayable data structure and processing similar to that of steps S504 to S508 may be executed.

FIG. 7 is a flowchart illustrating the state change data generation processing of steps S502 and S503 of FIG. 5.

In step S701, the control unit 101 executes expanding processing to set an expanded region for the defect data for each defect ID in the defect data table correspond to comparison data from among the past first defect data and the most recent second defect data input in step S501.

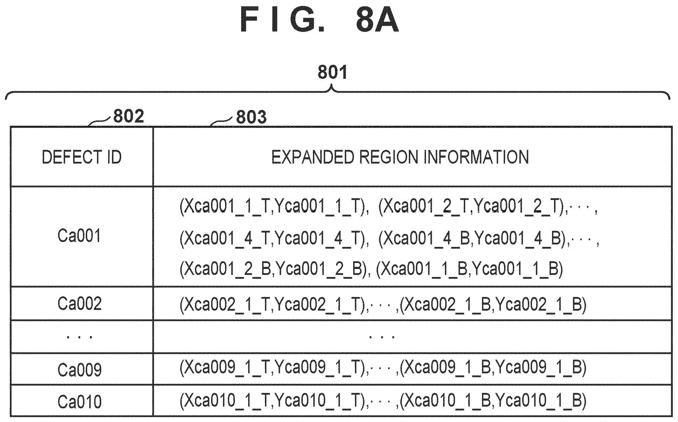

FIGS. 8A to 8C are explanatory diagrams of the expanding processing in step S701 of FIG. 7. FIG. 8A illustrates an expanded region data table 801 generated by expanding processing being executed on the defect data for each defect ID in the defect data table corresponding to the comparison data from among the defect data tables of FIGS. 2A and 2B. The expanded region data table 801 includes defect ID 802 and expanded region information 803. The defect ID 802 corresponds to the defect ID in the defect data table of FIGS. 2A and 2B. The expanded region information 803 is vector data representing the contours of an expanded region generated as the result of executing the expanding processing on the defect data and corresponds to a polygonal vertex coordinates list described below, for example.

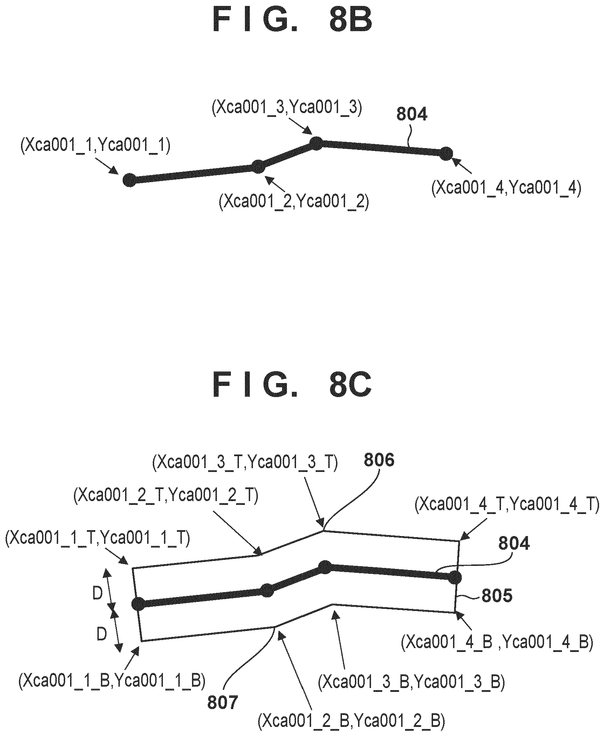

FIG. 8B illustrates a polyline 804 of a crack drawn on the basis of the defect data with the defect ID of Ca001 in the first defect data table 201 of FIG. 2A. A thin line 805 of FIG. 8C illustrates a polygonal expanded region generated by executing the expanding processing on the polyline 804 of FIG. 8B. Note that the black dots of the polyline 804 correspond to the vertex coordinates registered in the vertex coordinates list with the defect ID of Ca001. An expanded region 805 is generated by connecting the intersection points of extensions of the line segments composing the polyline 804 obtained by translating the line segments to both sides by a predetermined distance D and straight lines orthogonal to the line segments at both ends of the polyline 804 that also pass through both ends. Note that the shape of the expanded region 805 is not limited to a polygon and it is sufficient that it is a closed region. For example, the shape in FIG. 8C may be given an outline with rounded corners formed by arcs centered at vertices of the bend portion of the polyline 804 with a radius equal to the distance D so that corners 806 and 807 corresponding to vertices on each side of the bend portion of the polyline 804 may be positioned further from the polyline 804 than the predetermined distance D. In particular, when the bend portion of the polyline 804 has an acute angle, the difference to the predetermined distance D becomes significant. Thus, processing to round the corners contributes to improving accuracy when generating corresponding relationship data with the reference data for common portions.

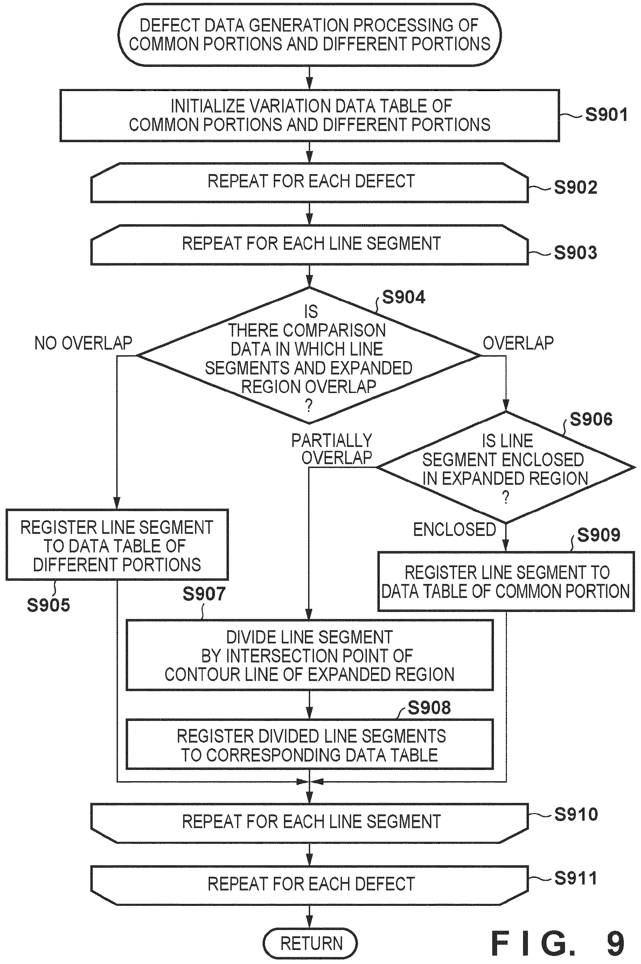

In step S702, the control unit 101 uses the defect data of the reference data and the expanded region generated from the defect data of the comparison data generated in step S701 to generate defect data of common portions and different portions in the reference data and the comparison data. The defect data generation processing of the common portions and the different portions will be described below using FIG. 9.

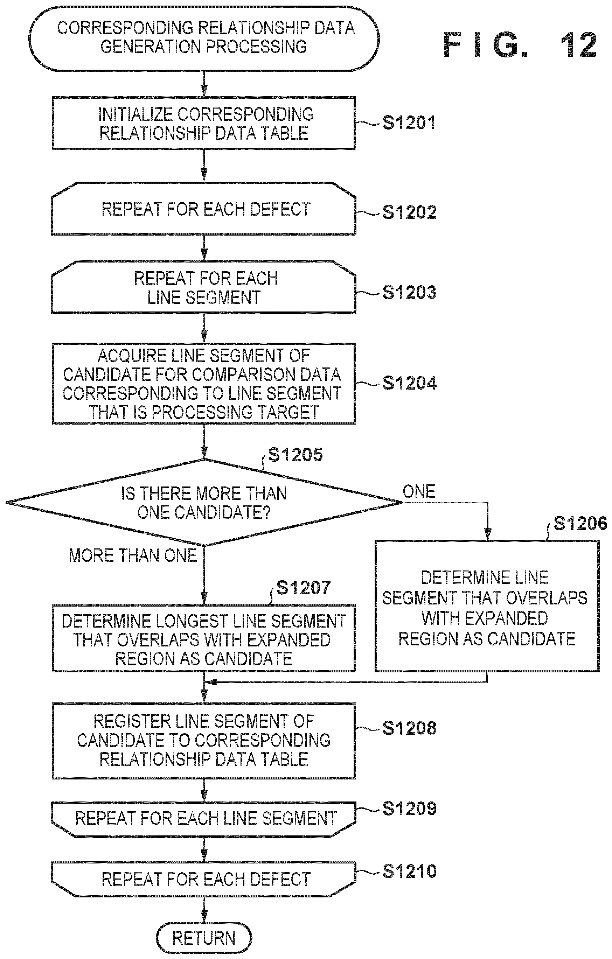

In step S703, the control unit 101 generates corresponding relationship data indicating the corresponding relation between the expanded region generated in step S701 and the defect data of the common portions generated in step S702. The corresponding relationship data generation processing will be described below using FIG. 12.

DEFECT DATA GENERATION PROCESSING OF COMMON PORTIONS AND DIFFERENT PORTIONS

Next, the defect data generation processing of the common portions and the different portions of step S702 of FIG. 7 will be described with reference to FIGS. 9 to 11C.

FIG. 9 is a flowchart illustrating the defect data generation processing of the common portions and the different portions in step S702 of FIG. 7.

In step S901, the control unit 101 initializes the defect data table of the common portions and the different portions that is output as the processing result.

FIG. 10A illustrates a defect data table 1001 of the common portions.

FIG. 10B illustrates a defect data table 1051 of the different portions. The defect data table 1001 of the common portions of FIG. 10A includes defect ID 1002 for identifying the defect data of the common portions, reference defect ID 1003 for identifying the defect data corresponding to the reference before distinguishing between the common portions and the different portions, maximum width 1004, number of vertices 1005, and vertex coordinates list 1006. The reference defect ID 1003, the maximum width 1004, the number of vertices 1005, and the vertex coordinates list 1006 are similar to the defect ID 202, the maximum width 203, the number of vertices 204, and the vertex coordinates list 205 of FIG. 2A.

The defect data table 1015 of the different portions of FIG. 10B includes defect ID 1052 for identifying the defect data of the different portions, reference defect ID 1053 for identifying the defect data corresponding to the reference before distinguishing between the common portions and the different portions, maximum width 1054, number of vertices 1055, and vertex coordinates list 1056. The reference defect ID 1053, the maximum width 1054, the number of vertices 1055, and the vertex coordinates list 1056 are similar to the defect ID 252, the maximum width 253, the number of vertices 254, and the vertex coordinates list 255 of FIG. 2B. When the defect data table 1001 of the common portions of FIG. 10A and the defect data table 1015 of the different portions of FIG. 10B are initialized, each item is made empty of registered data. The defect data table 1001 of the common portions of FIG. 10A and the defect data table 1015 of the different portions of FIG. 10B are each provided with a pointer for indicating the position to register defect data in the processing of step S902 onward. When the tables are initialized, the pointer is located at the first row.

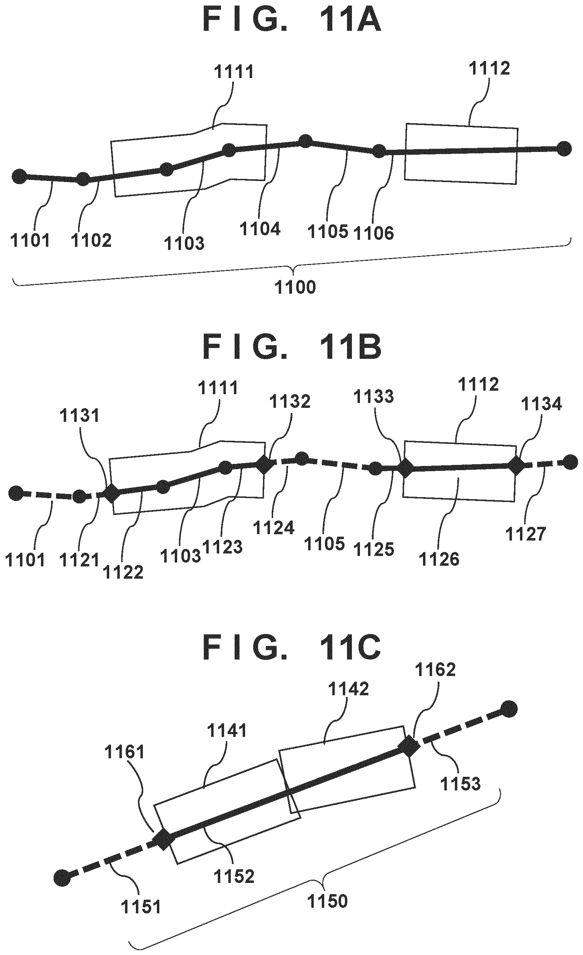

Next, the processing of FIG. 9 will be described with reference to FIGS. 11A to 11C.

FIGS. 11A to 11C illustrate the relationship between the reference data from the defect data of FIGS. 2A and 2B and the expanded region data generated from the comparison data. In FIG. 11A, a polyline 1100 is indicated by line segments connecting the vertex coordinates of the reference data. Line segments 1101 to 1106 indicate line segments connecting two adjacent vertices in the polyline 1100. Expanded regions 1111 and 1112 indicate expanded region data generated from the comparison data in step S701.

In step S902, the processing of steps S903 to S910 are repeated for each piece of defect data corresponding to reference data from the defect data of FIGS. 2A and 2B, or in other words, the processing is repeated per unit using the polyline 1100 illustrated in FIG. 11A as a unit.

In step S903, the processing of steps S904 to S909 is repeated for each line segment of the polyline of the defect data that is the current processing target for the reference data, or in other words, the processing is repeated for each of the line segments 1101 to 1106 of the polyline 1100 illustrated in FIG. 11A.

In step S904, the control unit 101 searches, from the expanded region data table 801 of FIGS. 8A to 8C, for the defect data of the comparison data corresponding to the expanded region overlapping the line segment of the defect data that is the current processing target. For the determination of whether or not the line segment of the defect data and the expanded region overlap, a collision detection technique or the like widely known in the computer game field and the like may be used. When the defect data of the comparison data corresponding to the expanded region overlapping the line segment of the defect data that is the current processing target is not detected, the control unit 101 proceeds the processing to step S905. When the defect data of the comparison data corresponding to the expanded region overlapping the line segment of the defect data that is the current processing target is detected, the control unit 101 proceeds the processing to step S906. In the example of FIG. 11A, the line segment 1101 and the expanded regions 1111 and 1112 are not overlapping, and thus the processing proceeds to step S905.

In step S905, the control unit 101 adds the line segment of the defect data that is the current processing target to the pointer position of the defect data table 1051 of different portions of FIG. 10B. Since the line segment 1101 is a line segment added to the first row, a new ID is issued and registered in the defect ID of different portions. Also, the defect ID and maximum width of the line segment 1101 are registered in the reference defect ID 1053 and the maximum width 1054, respectively, of the defect data table 1051 of different portions of FIG. 10B. Also, 2 is registered in the number of vertices 1055, and the vertex coordinates of the line segment 1101 is registered in the vertex coordinates list 1056.

The next line segment 1102 overlaps the expanded region 1111. Thus, it is determined that the defect data of the comparison data corresponding the expanded region overlapping the line segment of the defect data that is the current processing target in step S904 is detected, and the processing proceeds to step S906.

In step S906, the control unit 101 determines whether or not the line segment of the defect data that is the current processing target is enclosed by the expanded region. When the control unit 101 determines that a portion of the line segment of the defect data that is the current processing target is enclosed by the expanded region, the control unit 101 proceeds the processing to step S907. When the control unit 101 determines that all of the line segment is enclosed by the expanded region, the control unit 101 proceeds the processing to step S908. To determine whether or not the line segment of the defect data is enclosed by the expanded region and to calculate the intersection point described below, a technique widely known in the computer graphics field or the like may be used. Since a portion of the line segment 1102 is enclosed by the expanded region, the processing proceeds to step S907.

In step S907, the control unit 101 calculates the position data of midpoint coordinates not in the vertex coordinates list of the defect data table that is the comparison target by dividing the line segment enclosed by the expanded region and the line segment outside of the expanded region at the intersection point between the contour line of the expanded region and the line segment. Calculating the midpoint coordinates includes calculating a midpoint 1131, which is a diamond-shaped intersection point of a contour line 1111 with the line segment 1102, as illustrated in FIG. 11B. The midpoint 1131 divides the line segment 1102 into a line segment 1121 and a line segment 1122 and corresponds to the boundary between the common portion and the different portion.

In step S908, the control unit 101 divides the data of the line segments divided in step S907 into a data of the line segment enclosed by the expanded region and data of the line segment outside of the expanded region. Then, the data of the line segment enclosed in the expanded region is added to the defect data table 1001 of the common portions of FIG. 10A. Also, the data of the line segment outside of the expanded region is added to the defect data table 1051 of the different portions of the FIG. 10B. The data of the line segment 1121 is added to the defect data table 1001 of the common portions of FIG. 10A. The data of the line segment 1122 is added to the defect data table 1051 of the different portions of FIG. 10B. In the defect data table 1001 of the common portions of FIG. 10A, the vertex coordinates of the line segment 1101 are registered at the pointer position in step S905. However, since the line segment 1121 is continuous with the line segment 1101, one is added to the number of the first vertex adjacent to the line segment 1101 of the line segment 1121. Also, the vertex coordinates of the midpoint 1131, which is the second coordinates of the line segment 1121, is added as vertex coordinates not in the vertex coordinates list. Furthermore, for the line segment 1122, the vertex coordinates of the midpoint 1131 are newly added to the defect data table 1001 of the common portions of FIG. 10A. However, the processing to newly add the line segment 1122 is similar to that of step S905.

Since the next line segment 1103 overlaps the expanded region 1111, with the determination of step S904, the processing proceeds to step S906, and since the line segment 1103 is completely enclosed in the expanded region 1111, the processing proceeds to step S909.

In step S909, the control unit 101 adds the data of the line segment 1103 to the defect data table 1001 of the common portions of FIG. 10A. The processing to add the line segment 1103 to a row with vertex coordinates already registered is similar to the processing to add the line segment 1121 in step S908.

Since the next line segment 1104 partly overlaps the expanded region 1111, the processing proceeds to step S907, and the line segment 1104 is divided in a line segment 1123 and a line segment 1124 at a midpoint 1132, which is an intersection point with the expanded region. In step S908, the data of the line segment 1123 with the midpoint 1132 as the end point is added to the defect data table 1001 of the common portions of FIG. 10A, and the data of the line segment 1124 with the midpoint 1132 as the start point is added to the defect data table 1051 of the different portions of FIG. 10B. The processing to add the line segment 1123 to a row with vertex coordinates already registered is similar to the processing to add the line segment 1121 in step S908.

The processing to add the data of the line segment 1124 to the defect data table 1051 of the different portions of FIG. 10B is as follows.

At the pointer position of the defect data table 1051 of the different portions of FIG. 10B, the line segment 1101 and the line segment 1121 is added. However, in the current row of the vertex coordinates list, the coordinates of the start point and the end point of the line segment 1124 to be added cannot be included. Thus, the line segment 1124 can be known to be not continuous with the polyline registered at the current pointer position. Accordingly, the pointer proceeds to the next row, and the processing to add to a new row described already is executed.

Similar processing is executed for the line segments 1105 and 1106. The line segment 1106 is divided into a line segment 1125 with a midpoint 1133 as the end point, a line segment 1126 with the midpoint 1133 as the start point and a midpoint 1134 as the end point, and a line segment 1127 with the midpoint 1134 as the start point. The processing to add each divided line segment to the defect data table 1001 of the common portions of FIG. 10A and the defect data table 1051 of the different portions of FIG. 10B is similar to that of steps S905 and S908.

The processing to divide line segment in step S907 will now be further described using FIG. 11C. FIG. 11C illustrates a case where a portion of a line segment 1150 overlaps expanded regions 1141 and 1142. When the contour lines of the expanded region 1141 and the expanded region 1142 intersect at the central region of the line segment 1150 and the line segment 1150 overlaps the expanded region as illustrated in FIG. 11C, processing is executed to divide the line segment 1150 at the intersection points of the contour lines of a region combining the expanded regions, instead of using the intersection points of the contour lines of the expanded regions. In other words, the line segment 1150 is divided into three line segments 1151, 1152, and 1153.

CORRESPONDING RELATIONSHIP DATA GENERATION PROCESSING

Next, the corresponding relationship data generation processing of step S703 of FIG. 7 will be described with reference to FIGS. 12 to 16G.

FIG. 12 is a flowchart illustrating the corresponding relationship data generation processing of step S703 of FIG. 7.

In step S1201, the control unit 101 initializes the corresponding relationship data table that is output as the processing result.

FIG. 13 illustrates a corresponding relationship data table 1301. The corresponding relationship data table 1301 includes defect ID 1302 and corresponding information 1303 of the defect data of the common portions. The defect ID 1302 of the defect data of the common portions corresponds to the defect ID of the defect data table 1001 of the common portions of FIG. 10A. In the corresponding information 1303, for each line segment composing a polyline of defect data of a common portion, the defect ID in the comparison data that is determined to be a match and the result of determining whether there is an increase or decrease in the maximum width of the cracks in the comparison data are registered as a set. For example, a defect ID Cbm001 of the defect data of the common portions in the first row of the corresponding relationship data table 1301 corresponds to the Cbm001 in the first row of the defect data table 1001 of the common portions of FIG. 10A. The corresponding information 1303 indicates the corresponding relationship with the defect ID of the second defect data table 251 of FIG. 2B, which is the comparison data, for the line segments connecting the vertices in order of registration in the vertex coordinates list 1006 of the defect data table 1001 of the common portions of FIG. 10A.

In step S1202, the processing of steps S1203 to S1209 is repeated for each row of the defect data table 1001 of the common portions of FIG. 10A.

In step S1203, the processing of steps S 1204 to S 1208 is repeated for each line segment of the polyline of the defect data of the common portions that is the current processing target.

In step S 1204, the control unit 101 acquires the defect data of the line segment corresponding to a candidate for the comparison data corresponding to the line segment that is the current processing target. Herein, the defect ID of the comparison data corresponding to the source of the expanded region overlapped with the line segment is searched for from the expanded region data table 801 of FIG. 8A. Note that in the processing of FIG. 9, since only the line segments that overlap one of the expanded regions are registered in the defect data table 1001 of the common portions of FIG. 10A, a candidate can always be detected.

In step S1205, the control unit 101 determines whether or not there is more than one piece of defect data of a line segment corresponding to a candidate acquired in step S1204. When the control unit 101 determines that there is one candidate acquired in step S1204, the control unit 101 proceeds the processing to step S1206. When the control unit 101 determines that there is more than one candidate acquired in step S1204, the control unit 101 proceeds the processing to step S1207.

In step S1206, the control unit 101 determine the defect data acquired in step S 1204 to be a candidate for comparison data corresponding the line segment that is the current processing target.

In step S1207, the control unit 101 determines, from the defect data acquired in step S 1207, the defect data with the longest overlapping length between the expanded region and the line segment as a candidate for comparison data corresponding the line segment that is the current processing target. Note that the user may be able to change the candidate determined in step S 1207.

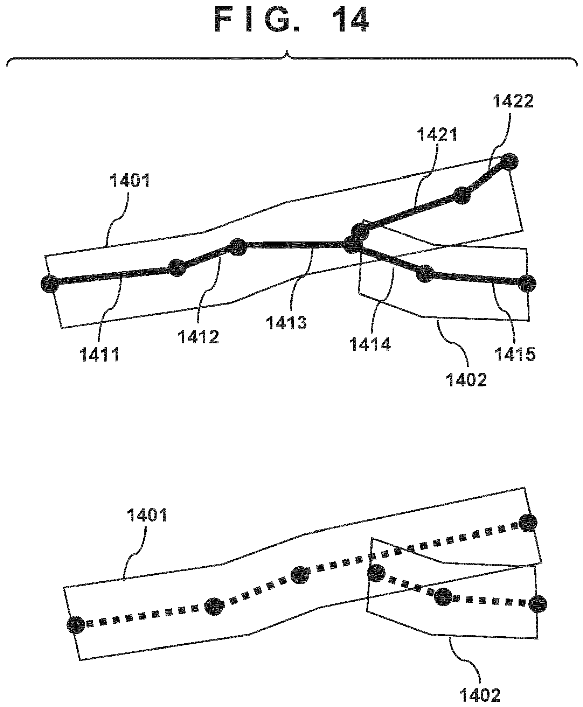

Next, the processing to determine the defect data of the line segment corresponding to a candidate for comparison data corresponding the line segment that is the current processing target in steps S1205 to S1207 will be described with reference to FIG. 14.

In FIG. 14, a thin line 1401 and a thin line 1402 indicate expanded regions generated from the defect data of the comparison data. Line segments 1411 to 1415 are line segments composing a polyline of the defect data registered in the defect data table 1001 of the common portions of FIG. 10A. Aline segment 1421 and a line segment 1422 are line segments composing a polyline of another piece of defect data registered in the defect data table 1001 of the common portions of FIG. 10A. Herein, the line segments 1411, 1412, 1413, and 1422 only overlap the expanded region 1401, and the line segment 1415 only overlaps the expanded region 1402. Thus, in step S1205, one candidate is determined. Then, in step S 1206, the defect ID of the comparison data corresponding to the source of the expanded region 1401 and the expanded region 1402 is determined to be a candidate. Also, the line segment 1414 overlaps the expanded region 1401 and the expanded region 1402, but the overlapping length with the expanded region 1402 is longer. Thus, the candidate determined in step S1207 is the defect ID of the comparison data corresponding to the source of the expanded region 1402. In a similar manner, for the line segment 1421, the defect ID of the comparison data corresponding to the source of the expanded region 1401 is determined to be a candidate. Note that when one line segment is enclosed by a region of overlapping regions, the length of the overlapping line segment is the same for all of the expanded regions. In this case, the line segment is extend to both adjacent line segments of the polyline, and the expanded region with the longest length overlapping all of the overlapping region is determined. When a difference cannot be determined even when the line segment is extend to either terminating end of the polyline, another method, such as random selection, area of expanded region, order in the expanded region data table of the defect data corresponding to the source of the expanded region, or the like, is used in the determination.

In step S1208, the control unit 101 registers the defect ID of the comparison data determined to be a candidate in step S1206 or step S1207 and the information relating to an increase or decrease in the maximum width of the crack as a set in the corresponding relationship data table. The defect ID of the comparison data and the information relating to an increase or decrease in the maximum width of the crack are registered in the corresponding information 1303 of the defect ID 1302 at the pointer position in the corresponding relationship data table 1301 of FIG. 13. The information relating to an increase or decrease in the maximum width of the crack is generated by comparing the maximum width 1004 of the crack of the defect ID 1002 that is the current processing target registered in the defect data table 1001 of the common portions of FIG. 10A and the maximum width 203, 253 of the crack of the defect ID of the comparison data from the first defect data table 201 of FIG. 2A and the second defect data table 251 of FIG. 2B. When the maximum width of the crack of the defect ID that is the current processing target is greater than the maximum width of the crack of the defect ID registered in the defect data of the comparison data by an upper limit of a predetermined threshold, Wide is registered, when this is less by a lower limit of the predetermined threshold, Narrow is registered, and when this is within a range between the upper limit and the lower limit of the predetermined threshold, Same is registered.

By repeating the processing of steps S1204 to S1209, the candidate for the defect data of the comparison data and the information relating to an increase or decrease in the maximum width of the crack are registered for each line segment composing the defect data of the defect ID of the common portion that is the current processing target.

By referencing the corresponding relationship data table 1301 of FIG. 13, for example, a corresponding relationship between the past first defect data and the most recent second defect data, for example, is obtained even when the crack branches in a Y-shape and has different main axes as illustrated in FIG. 14. For example, a relationship where the past first defect data corresponds to the line segments 1411, 1412, 1413, 1421, and 1422 and the most recent second defect data corresponds to the line segments 1414 and 1415 is obtained.

Also, as state change data using the past first defect data as reference data in step S502 of FIG. 5, a defect data table of the common portions, a defect data table of the different portions, and a corresponding relationship data table of the common portions between the past first defect data and the most recent second defect data are generated. Also, as state change data using the most recent second defect data as reference data in step S503 of FIG. 5, a defect data table of the common portions, a defect data table of the different portions, and a corresponding relationship data table of the common portions between the most recent second defect data and the past first defect data are generated.

Next, the relationship between the six types of tables output as the state change determination processing result when a first defect data table 1501 (FIG. 2A) and a second defect data table 1502 (FIG. 2B) are input will be described with reference to FIG. 15.

Using the second defect data table 1502 as the reference data and the first defect data table 1501 as the comparison data, a defect data table 1511 (FIG. 10A) of the common portions and a defect data table 1512 (FIG. 10B) of the different portions are generated. In a similar manner, using the first defect data table 1501 as the reference data and the second defect data table 1502 as the comparison data, a defect data table 1521 (FIG. 10A) of the common portions and a defect data table 1522 (FIG. 10B) of the different portions are generated.

Furthermore, a corresponding relationship data table 1531 (FIG. 13) between the defect data table 1511 of the common portions with the second defect data table 1502 as the reference data and the first defect data table 1501 is generated. Also, a corresponding relationship data table 1532 (FIG. 13) between the defect data table 1521 of the common portions with the first defect data table 1501 as the reference data and the second defect data table 1502 is generated.

DISPLAY EXAMPLE OF STATE CHANGE DATA

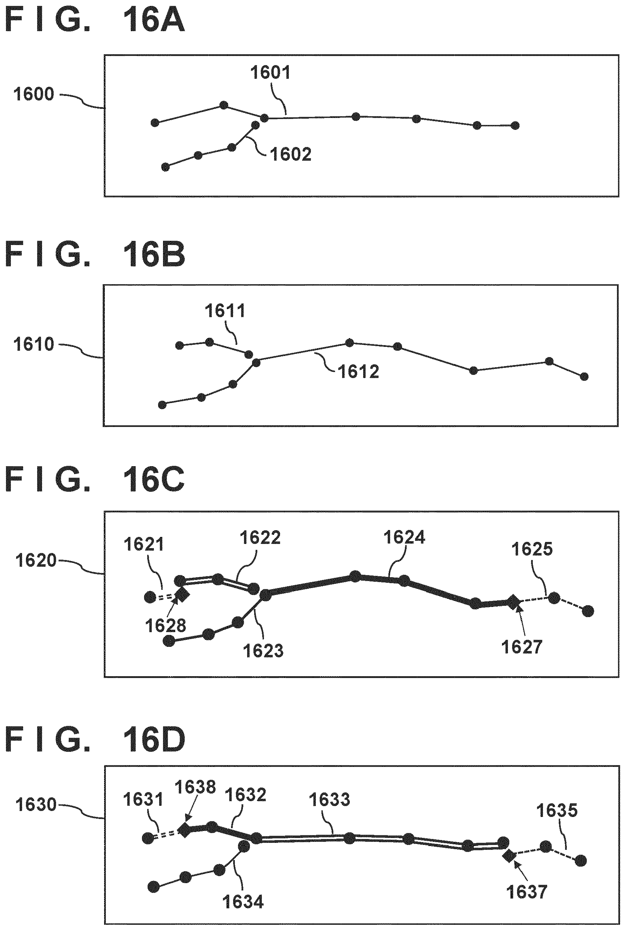

Lastly, a display example of the state change data will be described with reference to FIG. 15 and FIGS. 16A to 16G.

When the second defect data table 1502 is used as the reference data, the defect data table 1511 of the common portions of FIG. 15, the defect data table 1512 of the different portions, and the corresponding relationship data table 1531 and the defect data table 1522 of the different portions with the first defect data table 1501 used as the reference data are used when displaying. Also, when the first defect data table 1501 is used as the reference data, the defect data table 1521 of the common portions of FIG. 15, the defect data table 1522 of the different portions, and the corresponding relationship data table 1532 and the defect data table 1512 of the different portions with the second defect data table 1502 used as the reference data are used when displaying.

First, an example will be described where two cracks with different branching directions are displayed using the past first defect data of FIG. 16A and the most recent second defect data of FIG. 16B.

A display region 1600 of FIG. 16A indicates a portion of the first defect data display region 411 of FIG. 4. Defect data 1601 and defect data 1602 displayed in the display region 1600 are registered in rows with different defect IDs in the first defect data table 1501. The defect data 1601 and 1602 are drawn with circles at the vertex coordinates in the first defect data table 1501.

A display region 1610 of FIG. 16B indicates a portion of the second defect data display region 412 of FIG. 4. Defect data 1611 and defect data 1612 displayed in the display region 1610 are registered in rows with different defect IDs in the second defect data table 1502. The defect data 1611 and 1612 are drawn with circles at the vertex coordinates in the second defect data table 1502.

A display region 1620 of FIG. 16C indicates a portion of the display region 600 of FIG. 6. The state change determination processing result with the second defect data table 1502 as the reference data and the first defect data table 1501 as the comparison data is displayed in the display region 1620. In FIG. 16C, common portion defect data 1622 and common portion defect data 1623 and 1624 are registered in rows with different defect IDs in the defect data table 1511 of the common portions. In other words, the defect data 1623 and 1624 are registered with the same defect ID, and the defect data 1622 is registered with a different defect ID.

Note that the defect data 1622 to 1624 are each displayed using a different color. Also, the display color of the defect data 1622 to 1624 can be changed on the basis of the information relating to an increase or decrease in the maximum width of the crack registered as the corresponding information 1303 in the corresponding relationship data table 1301 of FIG. 13 generated in the corresponding relationship data generation processing of FIG. 12.

For example, when the increase or decrease in the maximum width of the crack in the corresponding information 1303 of the defect data 1624 is registered as Wide, the line width is made wider or the color is made darker than the defect data 1623 registered as Same, thereby making it possible to highlight the portion to which the user's attention is drawn. Also, when the increase or decrease in the maximum width of the crack in the corresponding information 1303 of the defect data 1622 is registered as Narrow, the color is made lighter than the defect data 1623 registered as Same, for example, thereby making it possible to be identifiably displayed. Note that how the defect data is displayed is not limited to color and thickness representations, and defect data may be represented using an animation of flashing or width thickness and the like.

Also, defect data 1625 is registered in the defect data table 1512 of the different portions corresponds to a portion where the maximum width of the crack of the defect data 1624 has progressed compared to the past first defect data. Note that the common portion defect data 1624 and the different portion defect data 1625 are divided at a midpoint 1627 that does not exist in the defect data 1612 (second defect data table 1502) of FIG. 16B.

Also, defect data 1621 indicates a portion that has disappear due to repair or the like during the time up until the most recent inspection. The defect data 1621 is registered in the defect data table 1522 of the different portions generated using the first defect data table 1501 as the reference data and the second defect data table 1502 as the comparison data. The different portion defect data 1621 is composed of a midpoint 1628 that does not exist in the defect data 1611 of FIG. 16B, calculated in the state change determination processing of FIG. 5. By displaying common portion cracks and different portion cracks in different colors in this manner, the user can come to intuitively comprehend the changes in the cracks.

Next, an example of a display of the processing result when the reference data and the comparison data are switched via the reference select button 431 will be described.

A display region 1630 of FIG. 16D indicates a portion of the display region 600 of FIG. 6. The state change determination processing result with the first defect data table 1501 as the reference data and the second defect data table 1502 as the comparison data is displayed in the display region 1630.

Defect data 1632 and 1633 are registered with the same defect ID in the defect data table 1521 of the common portions generated using the first defect data table 1501 as the reference. Also, defect data 1634 is registered with a different defect ID. In a similar manner to the display region 1620 of FIG. 16C, the defect data 1632 is registered with a crack maximum width of Wide in the corresponding relationship data table 1532 of the common portions of the past first defect data and the most recent second defect data using the first defect data table 1501 as the reference data. In this case, in the corresponding relationship data table 1532, the defect data 1632 is displayed highlighted more than the defect data 1634 registered with a crack maximum width of Same. In a similar manner, in the corresponding relationship data table 1532, the defect data 1633 registered with a crack maximum width of Narrow is displayed with a lighter color than the defect data 1633, for example.

Also, defect data 1631 corresponds to different portion defect data that is the same as the defect data 1621 of FIG. 16C that indicates a portion that has progressed from the past first defect data 1632 and is registered in the defect data table 1522 of the different portions.

Defect data 1635 is registered in the defect data table 1512 of the different portions. The defect data 1635 is different portion defect data corresponding to different portion defect data that is the same as the defect data 1625 of FIG. 16C that exists in the past first defect data but does not exist in the most recent second defect data.

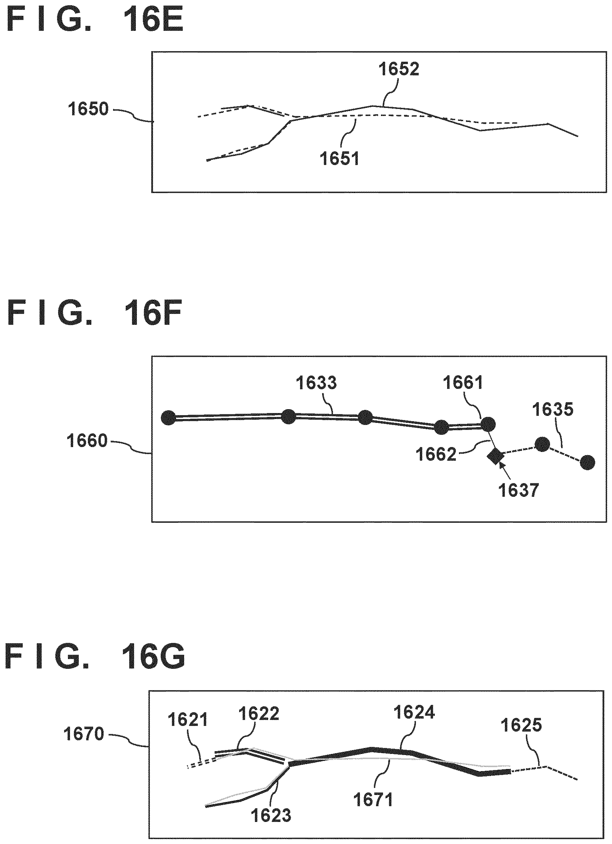

Also, as illustrated in FIGS. 16C and 16D, the defect data 1621 and 1635 that disappeared or retracted corresponding to the different portions in the comparison data with respect to the reference data may be discontinuous with the defect data 1622 and 1633 of the common portions of the reference data. This is because, as in a display region 1650 of FIG. 16E, when a past first defect data 1651 represented by a broken line and a most recent second defect data 1652 represented by a solid line are overlapped, the position and/or shape may change. The reason for the change in the position and/or shape of the crack is thought to be because of a difference between the accuracy when aligning to image an image and the accuracy when detecting a crack. In this manner, the common portions of the most recent second defect data and the different portions that exist in the past first defect data or the common portions of the past first defect data and the different portions of the most recent second defect data change position and thus are displayed as being discontinuous. FIG. 16F illustrates the defect data 1633 and the defect data 1635 of the display region 1630 of FIG. 16D in an enlarged manner. As in a display region 1660 of FIG. 16F, a vertex 1661 of the defect data 1633 and a midpoint 1637 of the defect data 1635 may be connected via a line segment, and the defect data 1633 and 1635 may be treated as a single piece of defect data. Accordingly, using the defect data 1633 of the common portion of the past first defect data as the reference data, one piece of defect data with a connected defect data 1635 of the different portion that has progressed from the past first defect data can be generated and displayed.

Note that since a line segment 1662 corresponds to a line segment that does not exist in the most recent second defect data and the past first defect data, the user's attention may be drawn to it when displayed by it being represented using color or a line. Also, when the common portion defect data 1633 and the different portion defect data 1635 are treated as the same crack, using the first defect data table 1501 as the reference data, the defect ID of the different portions registered in the defect data table 1522 of the different portions, the reference defect ID and the defect ID of the common portions of the defect data table 1521 of the common portions are used. Furthermore, the defect ID of the common portions registered in the corresponding relationship data table 1532 and the corresponding information may be used and specified.

Also in some cases, the shape of the crack may differ between the past first defect data and the most recent second defect data regarding the defect data of the common portions. In this case also, by switching the reference data in step S508 of FIG. 5, not only can the changed portion be confirmed using the most recent crack shape as a reference, but the changed portion can also be confirmed using the past crack shape as a reference. Accordingly, as in FIG. 16F, a combination of the defect data 1633 of the common portion of the past first defect data used as the reference data the user wants to confirm and the defect data 1635 of the different portion (progressed portion) of the most recent second defect data used as the comparison data can be displayed. Also, as in a display region 1670 of FIG. 16G, defect data 1671 of the common portion of the past first defect data as comparison data may be overlapped and displayed on the display region 1620 of FIG. 16C. The defect data 1671 corresponds to the defect data 1651 of FIG. 16E minus the defect data 1631 of the different portion of FIG. 16D. Note that in the example of FIG. 16G, since the defect data of the common portion of the past first defect data not used as reference data is displayed, the defect data 1671 is not displayed highlighted in terms of an increase or decrease in the maximum width of the crack, but it may be highlighted.

Also, in the corresponding relationship data table 1301 of FIG. 13, by the user specifying a defect ID of a common portion they wish to display via a mouse of the like, the defect data corresponding to the specified defect ID may be displayed.

According to the present embodiment, a change in a defect, such as the progress, retraction, repair, and the like of a crack, can be intuitively comprehended by a user. Also, by switching between the reference data and the comparison data when comparing the past first defect data and the most recent second defect data, a change in a crack can be confirmed using either the past first defect data or the most recent second defect data as the reference data and the other as the comparison data. This allows the user to multilaterally comprehend a change in the state of a defect.

Also, by generating defect data of the common portions and the defect data of the different portions, the amount of change in the cracks can be more easily calculated. Also, since a corresponding relationship data table of defect data of a plurality of common portions at different times can be generated and the cracks can be managed, even when the cracks branch in different directions, for the branched crack, the common portion of the past first defect data and the common portion of the most recent second defect data can be associated together. Furthermore, because the corresponding relationship between the common portion of the past first defect data and the common portion of the most recent second defect data can be obtained, an increase or decrease in the maximum width of the crack can also be calculated.

Modified Examples

In the example of the present embodiment described above, determination is performed to determine whether or not a line segment and an expanded region overlap and processing is executed to calculate the intersection point with a contour as vector data. However, no such limitation is intended. For example, objects corresponding to a filled in line segment and expanded region are rasterized into a 2-bit bitmap using a graphics library, and overlap determination and intersection point calculation may be performed via bit operation of both raster images. The information processing apparatus 100 of FIG. 1 may be additionally provided with a Graphics Processing Unit (GPU), and high speed processing may be obtained by performing rasterization in which the graphics library uses the GPU.

Second Embodiment

In the first embodiment, of the line segments of the reference data, all of the portions enclosed by the expanded region of the defect data that is the comparison target are determined to be common portions. However, in the present embodiment, these portions are further investigated and narrowed down, and a final determination of whether they are common portions or different portions is performed.

The hardware configuration of the information processing apparatus 100 of the second embodiment is similar to that illustrated in FIG. 1.

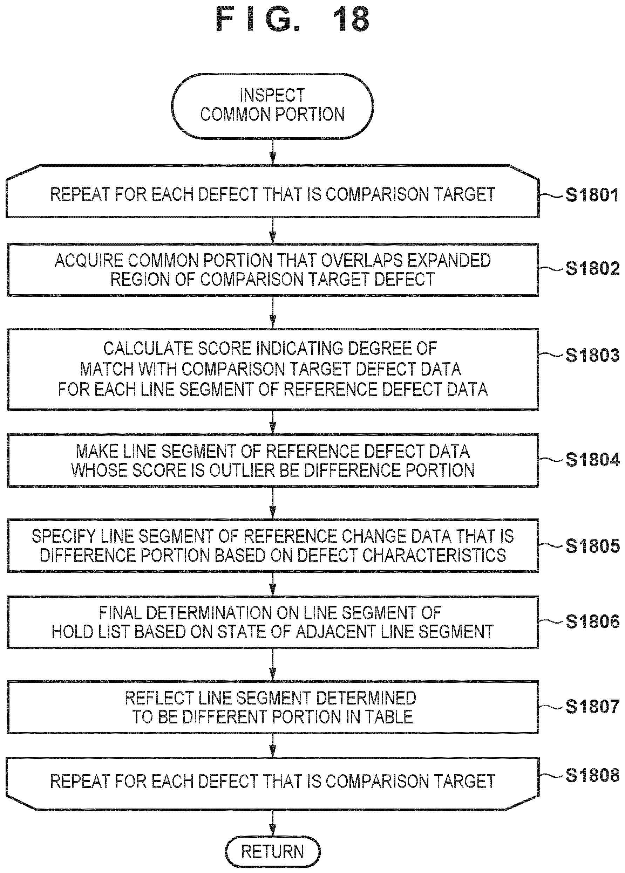

FIG. 17 is a flowchart illustrating the state change data generation processing according to the present embodiment, with the processing being similar to the processing of the first embodiment illustrated in FIG. 7 except that step S1701 is added. Step S1701 includes further inspecting and narrowing down portions determined to be a common portion in step S702 and executing processing for a final determination. FIG. 18 is a flowchart illustrating the inspection processing of the common portions in step S1701 of FIG. 17.

In step S1801, the control unit 101 initializes the hold list and the different portion list to be used in the subsequent processing and repeatedly executes the processing of steps S1802 to S1807 for each row (comparison target defect data) of the data table which is the comparison data in step S701 from among the defect data tables of FIGS. 2A and 2B.

In step S1802, from the reference defect data of the common portions generated in step S702, the control unit 101 acquires those that overlap a region obtained by executed expanding processing on the comparison target defect data being processed.

In step S1803, the control unit 101 calculates a score indicating the degree of match with the defect data that is the comparison target being processed for each line segment of the reference defect data of the common portions acquired in step S1802. Higher scores indicate that the line segment of the comparison target defect data being processed with respect to the line segment of the reference defect data is closer in terms of distance and is closer to being parallel. For example, the distance between line segments is the length of a perpendicular line from the midpoint of the line segment of the reference defect data down to the line segment of the comparison target defect data.

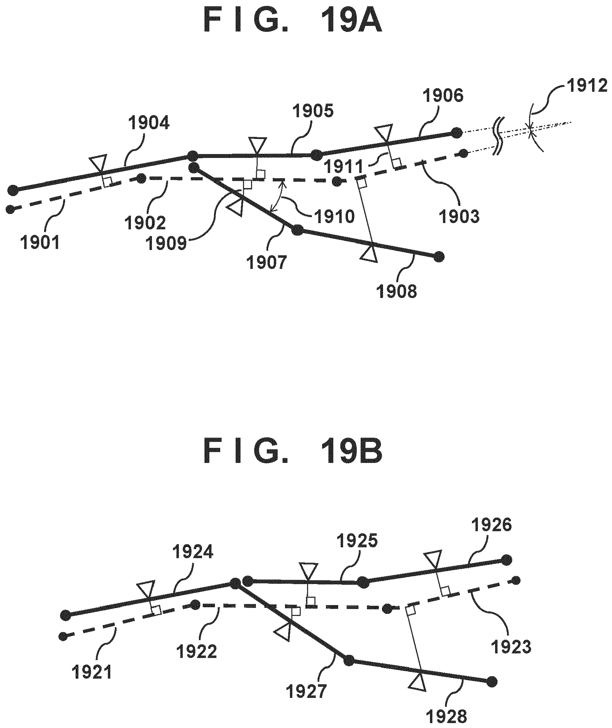

Next, an example of score calculation using the distance will be described using FIG. 19A. Line segments 1901 to 1903 are line segments of the comparison target defect data being processed, and line segments 1904 to 1906, 1907 and 1908 are line segments of the reference defect data including in the comparison target defect data. The length of the perpendicular line running from the midpoint (triangle symbol) of the line segment of the reference defect data toward the line segment of the comparison target defect data is the distance used to calculate the score of the line segment. For example, line segment 1909 is the distance to the comparison target defect of the line segment 1907, and line segment 1911 is the distance to the comparison target defect of the line segment 1906. Note that when a perpendicular line is drawn from the midpoint of a line segment of a single piece of reference defect data to the line segments of a plurality of pieces of comparison target defect data, the line segment of the comparison target defect data with the shortest perpendicular line is used in score calculation. Alternatively, when a perpendicular line cannot be drawn from any of the line segments of the defect data that are the comparison target (the foot of the perpendicular line is not on the line segment), the line segment of the reference defect data cannot have its score calculated and is added to a hold list. Hereinafter, the line segment of the reference defect data and the line segment of the comparison target defect data used in score calculation are described as being "near".

The following Equation 1 is an example of a score calculation formula for one line segment of the reference defect data.

Equation 1

$$Score = k \cdot \frac{W - d}{W} + cos\theta$$

In Equation 1, W is the width of the expanded region of the comparison target defect data, d is the length of the perpendicular line, $\theta$ is the angle (from 0 to 90°) formed by the line segment of the reference defect data and the line segment of the comparison target defect data. For example, the angles formed by the line segment 1907 and the line segment 1902 and the line segment 1906 and the line segment 1903 are angles 1910 and 1912, respectively. k is a coefficient for determining the relative weighting between the distance and the angle, and in the present embodiment, k = 1.

Note that the defect data detected from the imaged image may include contiguous short line segments forming a saw-like pattern. In such a case, the value of $\theta$ in Equation 1 is unstable, and the score may be far from a comprehensive degree of match. To prevent this, for each line segment of the reference defect data, following the order of the line segments, the score may be averaged out via a moving average, and the moving average value may be used for $\theta$ to calculate to score.

In step S1804, the control unit 101 compares scores calculated in step S 1803 and determines line segments of the reference defect data with score values that are outliers to be different portions and adds them to a different portion list. The outlier criteria is, for example, determined using a known statistical method such as taking a value obtained by subtracting the standard deviation from the score average value as a threshold and determining any value less than that as an outlier. In this manner, the line segment at a section that has branched away from the comparison target defect data is determined to be a different portion. Note that a value greater than the outlier criteria may be set as a second threshold, and a line segment with a score than is equal to or greater than the outlier threshold but less than the second threshold may be determined to not certainly be but have the possibility of being a different portion and be added to the hold list generated in step S1803. The second threshold is the average value of the scores, for example, but is not limited thereto, and it is sufficient that the value be greater than the outlier threshold.

In the case of FIG. 19A, of the line segments 1904 to 1908, the line segment 1908 is determined to have a score that is an outlier and thus is determined to be a different portion. FIG. 19B is similar to FIG. 19A, but illustrates a case where the defect data is generated from images, and the reference defect data is divided into a portion with line segments 1924, 1927, and 1928 and a portion with line segments 1925 to 1926. When calculating the score in step S1803 and estimating the different portions in step S1804, since each line segment is treated independently without taking into account the flow of the reference defect data, the line segment 1928 is added to a different portion list in the example of FIG. 19B similar to the example of FIG. 19A. For line segments that branch at the base like the line segments 1907 and 1927, when the distance d is short but the angle $\theta$ is sufficiently large and the score is greater than the outlier threshold, these line segments are added to the different portion list.

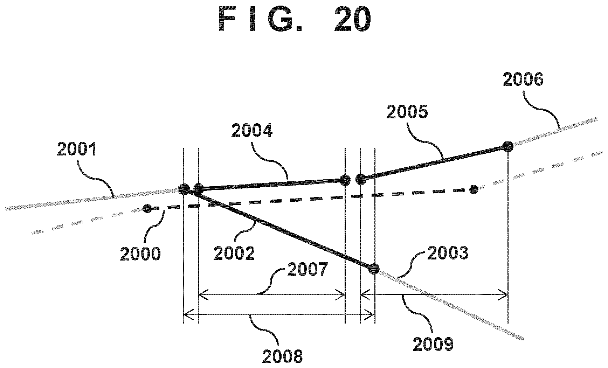

In step S1805, in the case where a line segment that branches at the base like the line segments 1907 and 1927 illustrated in FIGS. 19A and 19B is not determined to be a different portion, the line segment of the reference defect data near each line segment of the comparison target defect data being processed is further inspected by the control unit 101 using defect data characteristics. Next, an example of the inspection processing of step S1805 will be described using FIG. 20.

In FIG. 20, line segment 2000 is one line segment of the comparison target defect data being processed. The reference defect includes two portions, a portion including line segments 2001, 2004, 2005, and 2006 and a portion that branches therefrom including line segments 2002 and 2003. When defect data of the common portions is generated from images of these two reference defects, the defect data is divided into three portions, the line segments 2001 to 2003, the line segment 2004, and the line segments 2005 and 2006, and each are registered in the defect data table of the common portions. Also, from among the line segments 2002, 2003, 2004, and 2005 of the reference defect data near the line segment 2000, the line segment 2003 indicated by a gray solid line is determined to have a score that is an outlier in step S1804 and is determined to be a different portion.

In step S1805, first, the line segment 2004 with the highest score is determined to be a common portion, and then, from the remaining line segments, those that are different portions are identified using the defect data characteristics. For example, since one crack includes contiguous line segments, the line segments of the same crack does not run parallel near one another. Thus, the line segments that run parallel with a line segment determined to be a common portion can be determined to be a crack different from the common portion and thus a different portion. Whether a line segment is parallel is determined, for example, by whether or not the area of the line segment of the reference defect data overlaps the coordinate axis in the long side direction of a circumscribed rectangle of the line segment of the comparison target defect data. In the case of the line segment 2000 of the comparison target defect data of FIG. 20, because it is long in the X axial direction (horizontal direction), determination is performed by whether there is overlap in the area with respect to the X-axis. An area 2007 of the line segment 2004 determined to be a common portion and an area 2009 of the line segment 2005 do not overlap and thus do not run parallel with one another. However, an area 2008 of the line segment 2002 partly overlaps the area 2007 of the line segment 2004, and thus the line segment 2002 runs parallel with the line segment 2004. Accordingly, the line segment 2002 is determined to be a different portion and is added to the different portion list.

In step S1806, the control unit 101 performs the final determination using the adjacent line segment determination result for the line segments of the comparison target defect data entered onto the hold list in steps S1803 and S1804. The determination processing is executed on continuous hold portions line segments (line segments in the hold list) in the comparison target defect data, and only when both adjacent line segments are determined to be different portions, the hold portion line segments therebetween are collectively determined to be different portions.

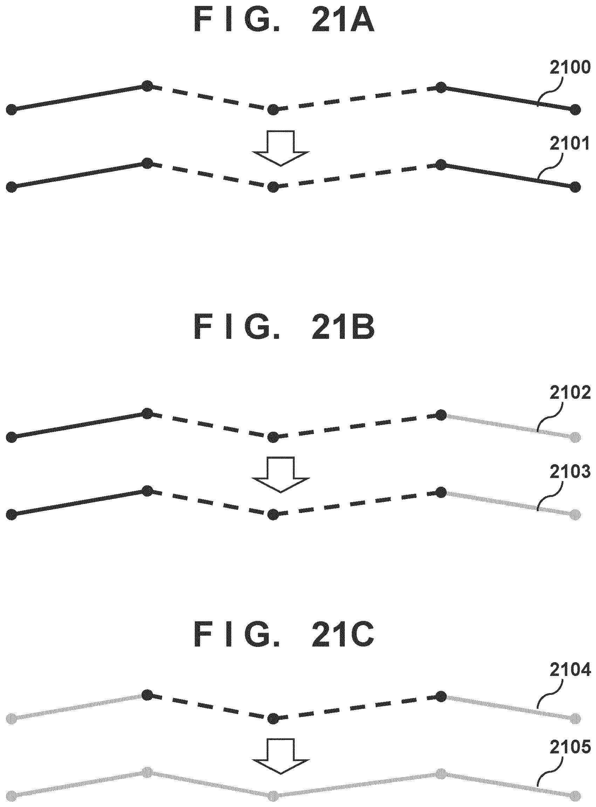

FIGS. 21A to 21C are diagrams illustrating examples of the processing of step S1806. In the different examples of FIGS. 21A to 21C, the comparison target defect data before the processing of step S1806 and the comparison target defect data after the processing are illustrated arranged above and below one another. In FIGS. 21A to 21C, the comparison target defect data is composed of four line segments, with line segments for which inspection is not finished (tentative common portions) being indicated by a black solid line, line segments entered into the hold list being indicated by a black broken line, and line segments determined to be a different portion indicated by a gray solid line. In comparison target defect data 2100 of FIG. 21A, the line segments at both ends are tentative common portions. Thus, the state of the two hold portion line segments does not change as illustrated with comparison target defect data 2101. In comparison target defect data 2102 of FIG. 21B, the line segment on the right end has been determined to be a different portion, but the line segment on the left end is a tentative common portion. Thus, the state does not change as illustrated with comparison target defect data 2103. In comparison target defect data 2104 of FIG. 21C, the line segments on both ends have been determined to be different portions. Thus, the hold portion line segment inbetween is determined to be a different portion and is removed from the hold list. Note that when an end of the reference defect data is a hold portion line segment (when it is the distal end of the defect data or when the next line segment is in the defect data table of the different portions of FIG. 10B), it is treated as though the next line segment is a different portion line segment.

The processing described above is repeatedly executed until there are no new line segments determined to be a different portion.

In step S1807, the control unit 101 reflects the inspection results of steps S1802 to S1806 in the defect data tables of the common portions and the different portions of FIGS. 10A and 10B. Then, for each line segment in the list of the different portions, it is determined whether or not the line segment overlaps an expanded region not of the comparison target defect data being processed. As a result, for any portion that does not overlap any expanded region, it is removed from the defect data table of the common portions and moved to the defect data table of the different portions. When the portion to be moved is partway in the original defect data of the common portions, the defect data of the common portions is divided, and a new defect data row is added to the table. Also, when moving a portion to the defect data table of the different portions, when either end of the portion to be moved matches an end of defect data of the different portions at the movement destination, the defect data are combined, and when there is no match with the end of any of the defect data, a new defect data row is added.

As described above, according to the present embodiment, reference defect data that overlaps an expanded region of comparison target defect data are inspected and narrowed down common portions and different portions on the basis of a degree of match with the comparison target defect data to obtain differences in terms of length and number of line segments more accurately. Also, by calculating the degree of match from the distance to the comparison target data and the angle with the comparison target data, branches and intersection base portions of defect data can be determined to be different portions with more accuracy. Furthermore, by narrowing down the reference defect data per each line segment composing the defect data, differences in connections at branching sections, subdivision of same defects, and the like generated when generating the defect data from image can be buffered. Also, by narrowing down by removing degree of match outliers, defects of the reference data of sections far from the comparison target data can be determined to be different portions. Furthermore, by obtaining a moving average following the connection of line segments of the defect data when calculating the degree of match, localized line segment disorder can be buffered. Also, by performing inspection based on defect data characteristics, the accuracy of the different portion determination can be further improved.

Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

The disclosure herein includes the following information processing apparatus, information processing method, system, storage medium and program.

[Aspect 1] An information processing apparatus (100) comprising: acquisition means (101) configured to acquire first defect data and second defect data generated on a basis of images imaged of an identical target;

calculation means (101) configured to obtain, on a basis of the first defect data and the second defect data, a common portion that is common between the first defect data and the second defect data and a different portion that exists in either the first defect data or the second defect data and calculate position data corresponding a boundary between the common portion and the different portion; and

generation means (101) configured to generate state change data indicating a change in a defect included in the common portion and the different portion using the position data.

[Aspect 2] The information processing apparatus according to aspect1, wherein

the calculation means uses either the first defect data or the second defect data as reference data and uses the other as comparison data and sets an expanded region based on the comparison data, and

uses defect data of a portion of the reference data enclosed by the expanded region as the common portion and uses other defect data of the reference data as the different portion and sets coordinates of an intersection point between the reference data and the expanded region as the position data.

[Aspect 3] The information processing apparatus according to aspect 2, wherein

the defect data includes information of at least one line segment composing a defect; and

in a case where there are a plurality of line segments of the comparison data for a line segment of the reference data, the generation means sets a line segment, from among line segments of the comparison data, with a longest length overlapping the expanded region as the line segment of the comparison data.

[Aspect 4] The information processing apparatus according to aspect 3, wherein

in a case where a plurality of expanded regions overlap, the expanded region is set to a region where all overlap.

[Aspect 5] The information processing apparatus according to any one of aspect 2 to 4, wherein

the defect data includes identification information of each defect, width of defect, number of vertices of line segment composing defect, and vertex coordinates; and
data of the expanded region includes identification information of each defect and coordinates of a contour of the expanded region.

[Aspect 6] The information processing apparatus according to any one of aspects 2 to 5, wherein
the generation means generates as the state change data defect data of the common portion, defect data of the different portion, and corresponding relationship data indicating a corresponding relationship between the common portion of the reference data and the comparison data.
[Aspect 7] The information processing apparatus according to aspect 6, wherein

the acquisition means reads out the first defect data from a first defect data table in which the first defect data is registered and reads out the second defect data from a second defect data table in which the second defect data is registered; and
the generation means generates a defect data table of the common portion where defect data of the common portion is to be registered and a defect data table of the different portion where defect data of the different portion is to be registered,
registers the position data in a defect data table of the common portion and a defect data table of the different portion, and
generates a corresponding relationship data table where the corresponding relationship data is to be registered.

[Aspect 8] The information processing apparatus according to aspect 6 or 7, wherein
the corresponding relationship data includes information indicating width of defect data of the common portion.
[Aspect 9] The information processing apparatus according to any one of aspects 1 to 8, wherein

the calculation means
obtains a common portion and a different portion using the first defect data as reference data and the second defect data as comparison data, and
obtains a common portion and a different portion using the second defect data as reference data and the first defect data as comparison data; and
the generation means generates the state change data for each obtained result.

[Aspect 10] The information processing apparatus according to any one of aspects 2 to 8, wherein

the calculation means includes
second calculation means configured to calculate a degree of match between reference data enclosed by the expanded region and the comparison data, and
filter means configured to further narrow down defect data as the common portion on a basis of the degree of match.

[Aspect 11] The information processing apparatus according to aspect 10, wherein
the second calculation means calculates the degree of match from a distance to the comparison data and an angle with the comparison data.
[Aspect 12] The information processing apparatus according to aspect 10 or 11, wherein
the second calculation means calculates the degree of match for each line segment composing the reference data.
[Aspect 13] The information processing apparatus according to aspect 12, wherein
the second calculation means obtains a moving average following connections in the reference data of scores of the degree of match calculated for each line segment.
[Aspect 14] The information processing apparatus according to any one of aspects 10 to 13, wherein
the second calculation means performs the narrowing down by removing outliers with less than a threshold for the degree of match.
[Aspect 15] The information processing apparatus according to any one of aspects 10 to 14, wherein
the filter means narrows down on a basis of defect data characteristics.
[Aspect 16] An image processing apparatus (100) comprising:

acquisition means (101) configured to acquire first defect data and second defect data generated on a basis of images imaged of an identical target;
calculation means (101) configured to use either the first defect data or the second defect data as reference data and use the other as comparison data and obtain a common portion that is common between the first defect data and the second defect data and a different portion that exists in either the first defect data or the second defect data; and
display means (106) configured to, in a case where the first defect data is the reference data, display defect data of the common portion and defect data of the different portion of the first defect data, and
in a case where the second defect data is the reference data, display defect data of the common portion and defect data of the different portion of the second defect data.

[Aspect 17] The information processing apparatus according to aspect 16, further comprising:
selection means (105, 431) configured to select whether to display the first defect data or the second defect data as the reference data,

wherein the display means, in a case where the first defect data is selected as the reference data, displays defect data of the common portion and defect data of the different portion of the first defect data and defect data of the different portion of the second defect data, and
in a case where the second defect data is selected as the reference data, displays defect data of the common portion and defect data of the different portion of the second defect data and defect data of the different portion of the first defect data.

[Aspect 18] The information processing apparatus according to aspect 16 or 17, wherein
the display means identifiably displays defect data of the common portion and defect data of the different portion.
[Aspect 19] The information processing apparatus according to any one of aspects 16 to 18, wherein
the display means identifiably displays a portion of defect data of the common portion with a changed defect width.
[Aspect 20] The information processing apparatus according to any one of aspects 16 to 19, wherein
in a case where defect data of the different portion of the comparison data with the reference data is discontinuous with the reference data, the display means displays defect data of the different portion and the reference data connected as one piece of defect data.
[Aspect 21] The information processing apparatus according to any one of aspects 16 to 19, wherein
the display means combines and displays common portions of the reference data and different portions of the comparison data.
[Aspect 22] The information processing apparatus according to any one of aspects 16 to 19, wherein
the display means overlaps and displays common portions of the comparison data on common portions and different portions of the reference data.
[Aspect 23] The information processing apparatus according to any one of aspects 16 to 22, further comprising:
generation means (101) configured to use either the first defect data or the second defect data as reference data and the other as comparison data, set an expanded region based on the comparison data, and generate state change data in which defect data of a portion of the reference data enclosed by the expanded region is used as the common portion and use other defect data of the reference data is used as the different portion.
[Aspect 24] The information processing apparatus according to aspect 23, wherein
the generation means generates as the state change data defect data of the common portion, defect data of the different portion, and corresponding relationship data indicating a corresponding relationship between the common portion of the reference data and the comparison data.
[Aspect 25] The information processing apparatus according to any one of aspects 1 to 24, wherein

the first defect data is defect data generated from an image imaged of an inspection target in a first time; and
the second defect data is defect data generated from an image imaged of the inspection target in a second time after the first time.

[Aspect 26] The information processing apparatus according to any one of aspects 1 to 25, wherein
the defect data is data relating to a crack.
[Aspect 27] An information processing system including an input device and an information processing apparatus,

wherein the input device comprises input means configured to input first defect data and second defect data generated on a basis of images imaged of an identical target, and
wherein the information processing apparatus comprises

acquisition means configured to acquire the first defect data and the second defect data from the input device;
calculation means configured to obtain, on a basis of the first defect data and second defect data, a common portion that is common between the first defect data and the second defect data and a different portion that exists in either the first defect data or the second defect data and calculate position data corresponding a boundary between the common portion and the different portion; and

generation means configured to generate state change data indicating a change in a defect included in the common portion and the different portion using the position data.

[Aspect 28] An image processing method of detecting a change in a state of a defect, comprising the steps of:

acquiring (S501) first defect data and second defect data generated on a basis of images imaged of an identical target;

on a basis of the first defect data and the second defect data, obtaining (S701-S703) a common portion that is common between the first defect data and the second defect data and a different portion that exists in either the first defect data or the second defect data and calculating position data corresponding a boundary between the common portion and the different portion; and

generating (S502, S503) state change data indicating a change in a defect included in the common portion and the different portion using the position data.

[Aspect 29] An image processing method of detecting a change in a state of a defect, comprising the steps of:

acquiring (S501) first defect data and second defect data generated on a basis of images imaged of an identical target;

using either the first defect data or the second defect data as reference data and using the other as comparison data and obtaining (S502, S503, S701-S703) a common portion that is common between the first defect data and the second defect data and a different portion that exists in either the first defect data or the second defect data;

in a case where the first defect data is the reference data, displaying (S505) defect data of the common portion and defect data of the different portion of the first defect data; and

in a case where the second defect data is the reference data, displaying (S505) defect data of the common portion and defect data of the different portion of the second defect data.

[Aspect 30] A computer-readable storage medium storing a program that causes a computer to execute the method according to aspect 28 or 29.

[Aspect 31] A program that causes a computer to execute the method according to aspect 28 or 29.

An information processing apparatus (100) acquires first defect data and second defect data generated on a basis of images imaged of an identical target, obtains a common portion that is common between the first defect data and the second defect data and a different portion that exists in either the first defect data or the second defect data and calculate position data corresponding a boundary between the common portion and the different portion, and generates state change data indicating a change in a defect included in the common portion and the different portion using the position data.

**Claims**

1. An information processing apparatus (100) comprising:

   acquisition means (101) configured to acquire first defect data and second defect data generated on a basis of images imaged of an identical target;

   calculation means (101) configured to obtain, on a basis of the first defect data and the second defect data, a common portion that is common between the first defect data and the second defect data and a different portion that exists in either the first defect data or the second defect data and calculate position data corresponding a boundary between the common portion and the different portion; and

   generation means (101) configured to generate state change data indicating a change in a defect included in the common portion and the different portion using the position data.

2. The information processing apparatus according to claim 1, wherein

   the calculation means uses either the first defect data or the second defect data as reference data and uses the other as comparison data and sets an expanded region based on the comparison data, and
uses defect data of a portion of the reference data enclosed by the expanded region as the common portion and uses other defect data of the reference data as the different portion and sets coordinates of an intersection point between the reference data and the expanded region as the position data.

3. The information processing apparatus according to claim 2, wherein

the defect data includes information of at least one line segment composing a defect; and
in a case where there are a plurality of line segments of the comparison data for a line segment of the reference data, the generation means sets a line segment, from among line segments of the comparison data, with a longest length overlapping the expanded region as the line segment of the comparison data.

4. The information processing apparatus according to claim 3, wherein
in a case where a plurality of expanded regions overlap, the expanded region is set to a region where all overlap.

5. The information processing apparatus according to any one of claims 2 to 4, wherein

the defect data includes identification information of each defect, width of defect, number of vertices of line segment composing defect, and vertex coordinates; and
data of the expanded region includes identification information of each defect and coordinates of a contour of the expanded region.

6. The information processing apparatus according to any one of claims 2 to 5, wherein
the generation means generates as the state change data defect data of the common portion, defect data of the different portion, and corresponding relationship data indicating a corresponding relationship between the common portion of the reference data and the comparison data.

7. The information processing apparatus according to claim 6, wherein

the acquisition means reads out the first defect data from a first defect data table in which the first defect data is registered and reads out the second defect data from a second defect data table in which the second defect data is registered; and
the generation means generates a defect data table of the common portion where defect data of the common portion is to be registered and a defect data table of the different portion where defect data of the different portion is to be registered,
registers the position data in a defect data table of the common portion and a defect data table of the different portion, and
generates a corresponding relationship data table where the corresponding relationship data is to be registered.

8. The information processing apparatus according to claim 6 or 7, wherein
the corresponding relationship data includes information indicating width of defect data of the common portion.

9. The information processing apparatus according to any one of claims 1 to 8, wherein

the calculation means
obtains a common portion and a different portion using the first defect data as reference data and the second defect data as comparison data, and
obtains a common portion and a different portion using the second defect data as reference data and the first defect data as comparison data; and
the generation means generates the state change data for each obtained result.

10. The information processing apparatus according to any one of claims 2 to 8, wherein

the calculation means includes
second calculation means configured to calculate a degree of match between reference data enclosed by the expanded region and the comparison data, and
filter means configured to further narrow down defect data as the common portion on a basis of the degree of match.

**11.** The information processing apparatus according to claim 10, wherein
the second calculation means calculates the degree of match from a distance to the comparison data and an angle with the comparison data.

**12.** The information processing apparatus according to claim 10 or 11, wherein
the second calculation means calculates the degree of match for each line segment composing the reference data.

**13.** The information processing apparatus according to claim 12, wherein
the second calculation means obtains a moving average following connections in the reference data of scores of the degree of match calculated for each line segment.

**14.** The information processing apparatus according to any one of claims 10 to 13, wherein
the second calculation means performs the narrowing down by removing outliers with less than a threshold for the degree of match.

**15.** The information processing apparatus according to any one of claims 10 to 14, wherein
the filter means narrows down on a basis of defect data characteristics.

**16.** An image processing apparatus (100) comprising:

acquisition means (101) configured to acquire first defect data and second defect data generated on a basis of images imaged of an identical target;
calculation means (101) configured to use either the first defect data or the second defect data as reference data and use the other as comparison data and obtain a common portion that is common between the first defect data and the second defect data and a different portion that exists in either the first defect data or the second defect data; and
display means (106) configured to, in a case where the first defect data is the reference data, display defect data of the common portion and defect data of the different portion of the first defect data, and
in a case where the second defect data is the reference data, display defect data of the common portion and defect data of the different portion of the second defect data.

**17.** The information processing apparatus according to claim 16, further comprising:

selection means (105, 431) configured to select whether to display the first defect data or the second defect data as the reference data,
wherein the display means, in a case where the first defect data is selected as the reference data, displays defect data of the common portion and defect data of the different portion of the first defect data and defect data of the different portion of the second defect data, and
in a case where the second defect data is selected as the reference data, displays defect data of the common portion and defect data of the different portion of the second defect data and defect data of the different portion of the first defect data.

**18.** The information processing apparatus according to claim 16 or 17, wherein
the display means identifiably displays defect data of the common portion and defect data of the different portion.

**19.** The information processing apparatus according to any one of claims 16 to 18, wherein
the display means identifiably displays a portion of defect data of the common portion with a changed defect width.

**20.** The information processing apparatus according to any one of claims 16 to 19, wherein
in a case where defect data of the different portion of the comparison data with the reference data is discontinuous with the reference data, the display means displays defect data of the different portion and the reference data connected as one piece of defect data.

**21.** The information processing apparatus according to any one of claims 16 to 19, wherein
the display means combines and displays common portions of the reference data and different portions of the comparison data.

**22.** The information processing apparatus according to any one of claims 16 to 19, wherein

the display means overlaps and displays common portions of the comparison data on common portions and different portions of the reference data.

23. The information processing apparatus according to any one of claims 16 to 22, further comprising:
generation means (101) configured to use either the first defect data or the second defect data as reference data and the other as comparison data, set an expanded region based on the comparison data, and generate state change data in which defect data of a portion of the reference data enclosed by the expanded region is used as the common portion and use other defect data of the reference data is used as the different portion.

24. The information processing apparatus according to claim 23, wherein
the generation means generates as the state change data defect data of the common portion, defect data of the different portion, and corresponding relationship data indicating a corresponding relationship between the common portion of the reference data and the comparison data.

25. The information processing apparatus according to any one of claims 1 to 24, wherein

the first defect data is defect data generated from an image imaged of an inspection target in a first time; and
the second defect data is defect data generated from an image imaged of the inspection target in a second time after the first time.

26. The information processing apparatus according to any one of claims 1 to 25, wherein
the defect data is data relating to a crack.

27. An information processing system including an input device and an information processing apparatus,

wherein the input device comprises input means configured to input first defect data and second defect data generated on a basis of images imaged of an identical target, and
wherein the information processing apparatus comprises
acquisition means configured to acquire the first defect data and the second defect data from the input device;
calculation means configured to obtain, on a basis of the first defect data and second defect data, a common portion that is common between the first defect data and the second defect data and a different portion that exists in either the first defect data or the second defect data and calculate position data corresponding a boundary between the common portion and the different portion; and
generation means configured to generate state change data indicating a change in a defect included in the common portion and the different portion using the position data.

28. An image processing method of detecting a change in a state of a defect, comprising the steps of:

acquiring (S501) first defect data and second defect data generated on a basis of images imaged of an identical target;
on a basis of the first defect data and the second defect data, obtaining (S701-S703) a common portion that is common between the first defect data and the second defect data and a different portion that exists in either the first defect data or the second defect data and calculating position data corresponding a boundary between the common portion and the different portion; and
generating (S502, S503) state change data indicating a change in a defect included in the common portion and the different portion using the position data.

29. An image processing method of detecting a change in a state of a defect, comprising the steps of:

Acquiring (S501) first defect data and second defect data generated on a basis of images imaged of an identical target;
using either the first defect data or the second defect data as reference data and using the other as comparison data and obtaining (S502, S503, S701-S703) a common portion that is common between the first defect data and the second defect data and a different portion that exists in either the first defect data or the second defect data;
in a case where the first defect data is the reference data, displaying (S505) defect data of the common portion and defect data of the different portion of the first defect data; and
in a case where the second defect data is the reference data, displaying (S505) defect data of the common portion and defect data of the different portion of the second defect data.

**30.** A computer-readable storage medium storing a program that causes a computer to execute the method according to claim 28 or 29.

**31.** A program that causes a computer to execute the method according to claim 28 or 29.

# FIG. 1

100

101 102 103 104

| CONTROL UNIT | NON-VOLATILE MEMORY | WORKING MEMORY | STORAGE DEVICE |

BUS

108

| INPUT DEVICE | OUTPUT DEVICE | COMMUNICATION INTERFACE |

105 106 107

# F I G. 2A

EP 4 195 147 A2

| DEFECT ID | MAXIMUM WIDTH | NUMBER OF VERTICES | VERTEX COORDINATES LIST |
|-----------|---------------|--------------------|-------------------------|
| Ca001 | 0.8mm | 4 | $(Xca001\_1, Yca001\_1), \cdots, (Xca001\_4, Yca001\_4)$ |
| Ca002 | 0.4mm | 8 | $(Xca002\_1, Yca002\_1), \cdots, (Xca002\_8, Yca002\_8)$ |
| Ca003 | 1.0mm | 3 | $(Xca003\_1, Yca003\_1), \cdots, (Xca003\_3, Yca003\_3)$ |
| Ca004 | 0.7mm | 5 | $(Xca004\_1, Yca004\_1), \cdots, (Xca004\_5, Yca004\_5)$ |
| . . . | . . . | . . . | . . . |
| Ca008 | 0.6mm | 3 | $(Xca008\_1, Yca008\_1), \cdots, (Xca008\_3, Yca008\_3)$ |
| Ca009 | 0.6mm | 3 | $(Xca009\_1, Yca009\_1), \cdots, (Xca009\_3, Yca009\_3)$ |
| Ca010 | 0.6mm | 6 | $(Xca010\_1, Yca010\_1), \cdots, (Xca010\_6, Yca010\_6)$ |

# F I G. 2B

| DEFECT ID | MAXIMUM WIDTH | NUMBER OF VERTICES | VERTEX COORDINATES LIST |
|---|---|---|---|
| Cb001 | 0.8mm | 6 | (Xcb001_1,Ycb001_1),···,(Xcb001_6,Ycb001_6) |
| Cb002 | 0.6mm | 12 | (Xcb002_1,Ycb002_1),···,(Xcb002_12,Ycb002_12) |
| Cb003 | 1.0mm | 3 | (Xcb003_1,Ycb003_1),···,(Xcb003_3,Ycb003_3) |
| Cb004 | 0.4mm | 6 | (Xcb004_1,Ycb004_1),···,(Xcb004_6,Ycb004_6) |
| ... | ... | ... | ... |
| Cb008 | 0.6mm | 4 | (Xcb008_1,Ycb008_1),···,(Xcb008_4,Ycb008_4) |
| Cb009 | 0.6mm | 3 | (Xcb009_1,Ycb009_1),···,(Xcb009_3,Ycb009_3) |
| Cb010 | 0.7mm | 11 | (Xcb010_1,Ycb010_1),···,(Xcb010_11,Ycb010_11) |

(252) (253) (254) (255)

EP 4 195 147 A2

# F I G. 3A

300

301 302 303

304 305

306 307

308

309 310

# F I G. 3B

350

351 352 353

354 356

355

357 358

359 360

# FIG. 4

FIRST DEFECT DATA

SECOND DEFECT DATA

REFERENCE SELECTION ◯ FIRST ● SECOND

RESULT OUTPUT

EP 4 195 147 A2

EP 4 195 147 A2

# F I G. 5

# F I G.  6

# F I G.  7

STATE CHANGE DATA
GENERATION PROCESSING

EXPANDING PROCESSING OF DEFECT DATA — S701

GENERATE DEFECT DATA OF COMMON
PORTIONS AND DIFFERENT PORTIONS — S702

GENERATE CORRESPONDING
RELATIONSHIP DATA — S703

RETURN

# FIG. 8A

EP 4 195 147 A2

| DEFECT ID | EXPANDED REGION INFORMATION |
|---|---|
| Ca001 | (Xca001_1_T,Yca001_1_T), (Xca001_2_T,Yca001_2_T),···,<br>(Xca001_4_T,Yca001_4_T), (Xca001_4_B,Yca001_4_B),···,<br>(Xca001_2_B,Yca001_2_B), (Xca001_1_B,Yca001_1_B) |
| Ca002 | (Xca002_1_T,Yca002_1_T),···,(Xca002_1_B,Yca002_1_B) |
| ··· | ··· |
| Ca009 | (Xca009_1_T,Yca009_1_T),···,(Xca009_1_B,Yca009_1_B) |
| Ca010 | (Xca010_1_T,Yca010_1_T),···,(Xca010_1_B,Yca010_1_B) |

801

802    803

# F I G. 8B

(Xca001_3,Yca001_3)    804

(Xca001_1,Yca001_1)

(Xca001_2,Yca001_2)

(Xca001_4,Yca001_4)

# F I G. 8C

(Xca001_3_T,Yca001_3_T)    806

(Xca001_2_T,Yca001_2_T)

(Xca001_4_T,Yca001_4_T)

(Xca001_1_T,Yca001_1_T)

804

D

805

D

(Xca001_4_B ,Yca001_4_B)

(Xca001_1_B,Yca001_1_B)

(Xca001_3_B,Yca001_3_B)

807

(Xca001_2_B,Yca001_2_B)

DEFECT DATA GENERATION PROCESSING OF COMMON PORTIONS AND DIFFERENT PORTIONS

INITIALIZE VARIATION DATA TABLE OF COMMON PORTIONS AND DIFFERENT PORTIONS — S901

REPEAT FOR EACH DEFECT — S902

REPEAT FOR EACH LINE SEGMENT — S903

S904
IS THERE COMPARISON DATA IN WHICH LINE SEGMENTS AND EXPANDED REGION OVERLAP ?

NO OVERLAP — OVERLAP

PARTIALLY OVERLAP

S906
IS LINE SEGMENT ENCLOSED IN EXPANDED REGION ?

ENCLOSED

REGISTER LINE SEGMENT TO DATA TABLE OF DIFFERENT PORTIONS
S905

S909
REGISTER LINE SEGMENT TO DATA TABLE OF COMMON PORTION

S907
DIVIDE LINE SEGMENT BY INTERSECTION POINT OF CONTOUR LINE OF EXPANDED REGION

S908
REGISTER DIVIDED LINE SEGMENTS TO CORRESPONDING DATA TABLE

REPEAT FOR EACH LINE SEGMENT — S910

REPEAT FOR EACH DEFECT — S911

RETURN

F I G. 9

33

# F I G. 10A

| COMMON PORTION DEFECT ID | REFERENCE DEFECT ID | MAXIMUM WIDTH | NUMBER OF VERTICES | VERTEX COORDINATES LIST |
|---|---|---|---|---|
| Cbm001 | Cb001 | 0.8mm | 6 | (Xcb001_1,Ycb001_1),···,(Xcb001_M1,Ycb001_M1) |
| Cbm002 | Cb002 | 0.6mm | 9 | (Xcb002_M1,Ycb002_M1),···,(Xcb002_12,Ycb002_12) |
| Cbm004 | Cb004 | 0.4mm | 3 | (Xcb004_1,Ycb004_1),···,(Xcb004_3,Ycb004_3) |
| ··· | ··· | ··· | ··· | ··· |
| Cbm009 | Cb009 | 0.6mm | 3 | (Xcb009_1,Ycb009_1),···,(Xcb009_8,Ycb009_8) |
| Cbm010 | Cb010 | 0.7mm | 3 | (Xcb010_1,Ycb010_1),···,(Xcb010_M1,Ycb010_M1) |
| Cbm010 | Cb010 | 0.7mm | 6 | (Xcb010_M2,Ycb010_M2),···,(Xcb010_11,Ycb010_11) |

1001
1002  1003  1004  1005  1006

# FIG. 10B

EP 4 195 147 A2

| DIFFERENT PORTION DEFECT ID | REFERENCE DEFECT ID | MAXIMUM WIDTH | NUMBER OF VERTICES | VERTEX COORDINATES LIST |
|---|---|---|---|---|
| Cbx001 | Cb001 | 0.8mm | 3 | (Xcb001_M1,Ycb001_M1),···,(Xcb001_6,Ycb001_6) |
| Cbx002 | Cb002 | 0.6mm | 3 | (Xcb002_1,Ycb002_1),···,(Xcb002_M1,Ycb002_M1) |
| Cbx003 | Cb003 | 0.6mm | 4 | (Xcb002_1,Ycb002_1),···,(Xcb002_4,Ycb002_4) |
| . . . | . . . | . . . | . . . | . . . |
| Cbx010 | Cb007 | 0.6mm | 3 | (Xcb002_M1,Ycb002_M1),···,(Xcb002_M2,Ycb002_M2) |

1051

1052  1053  1054  1055  1056

# FIG. 11A

# FIG. 11B

# FIG. 11C

F I G. 12

CORRESPONDING RELATIONSHIP DATA
GENERATION PROCESSING

INITIALIZE CORRESPONDING
RELATIONSHIP DATA TABLE ~S1201

REPEAT FOR EACH DEFECT ~S1202

REPEAT FOR EACH
LINE SEGMENT ~S1203

ACQUIRE LINE SEGMENT OF
CANDIDATE FOR COMPARISON DATA
CORRESPONDING TO LINE SEGMENT
THAT IS PROCESSING TARGET ~S1204

S1205

IS THERE MORE THAN
ONE CANDIDATE?

ONE

MORE THAN ONE

S1206

DETERMINE LINE
SEGMENT THAT OVERLAPS
WITH EXPANDED
REGION AS CANDIDATE

S1207

DETERMINE LONGEST LINE SEGMENT
THAT OVERLAPS WITH EXPANDED
REGION AS CANDIDATE

REGISTER LINE SEGMENT OF
CANDIDATE TO CORRESPONDING
RELATIONSHIP DATA TABLE ~S1208

REPEAT FOR EACH LINE SEGMENT ~S1209

REPEAT FOR EACH DEFECT ~S1210

RETURN

# F I G. 13

EP 4 195 147 A2

1301

| 1302 COMMON PORTION DEFECT ID | 1303 CORRESPONDING INFORMATION |
|---|---|
| Cb001 | (Ca001,Wide), (Ca001,Wide), (Ca001,Wide), (Ca001,Wide), (Ca001,Wide) |
| Cb002 | (Ca002,Wide), (Ca002,Wide),···,(Ca002,Wide), (Ca002,Wide) |
| Cb004 | (Ca004,,Same), (Ca002,Same) |
| · · · | · · · |
| Cb009 | (Ca008,,Narrow), (Ca008,Narrow) |
| Cb010 | (Ca009,Wide), (Ca009,Wide) |
| Cb011 | (Ca010,Wide), (Ca010,Wide), (Ca010,Wide), (Ca010,Wide), (Ca010,Wide) |

# F I G. 14

EP 4 195 147 A2

# FIG. 15

**1501**
FIRST DEFECT DATA TABLE
(PAST FIRST DEFECT DATA)

**1531**
CORRESPONDING
RELATIONSHIP DATA TABLE
(MOST RECENT
SECOND DEFECT DATA
IS REFERENCE DATA)

**1532**
CORRESPONDING
RELATIONSHIP DATA TABLE
(PAST FIRST DEFECT DATA
IS REFERENCE DATA)

**1502**
SECOND
DEFECT DATA TABLE
(MOST RECENT SECOND
DEFECT DATA)

**1522**
DEFECT DATA TABLE OF
DIFFERENT PORTIONS
(PAST FIRST DEFECT DATA
IS REFERENCE DATA)

**1521**
DEFECT DATA TABLE OF
COMMON PORTIONS
(PAST FIRST DEFECT DATA
IS REFERENCE DATA)

**1511**
DEFECT DATA TABLE OF
COMMON PORTIONS
(MOST RECENT SECOND
DEFECT DATA IS
REFERENCE DATA)

**1512**
DEFECT DATA TABLE OF
DIFFERENT PORTIONS
(MOST RECENT SECOND
DEFECT DATA IS
REFERENCE DATA)

FIG. 16A

1600

1601

1602

FIG. 16B

1610

1611

1612

FIG. 16C

1620

1621

1622

1624

1625

1628

1623

1627

FIG. 16D

1630

1631 1638 1632

1633

1635

1634

1637

FIG. 16E

1652

1650

1651

FIG. 16F

1633          1661

1635

1660

1662

1637

FIG. 16G

1621    1622          1624          1625

1670

1671

1623

# F I G. 17

```
      ┌─────────────────────────┐
      │   STATE CHANGE DATA      │
      │ GENERATION PROCESSING    │
      └─────────────────────────┘
                  │
                  ▼
┌───────────────────────────────────┐
│ EXPANDING PROCESSING OF DEFECT DATA│  ～S701
└───────────────────────────────────┘
                  │
                  ▼
┌───────────────────────────────────┐
│ GENERATE DEFECT DATA OF COMMON     │  ～S702
│ PORTIONS AND DIFFERENT PORTIONS    │
└───────────────────────────────────┘
                  │
                  ▼
┌───────────────────────────────────┐
│     INSPECT COMMON PORTION         │  ～S1701
└───────────────────────────────────┘
                  │
                  ▼
┌───────────────────────────────────┐
│    GENERATE CORRESPONDING          │  ～S1703
│    RELATIONSHIP DATA               │
└───────────────────────────────────┘
                  │
                  ▼
            ┌──────────┐
            │  RETURN  │
            └──────────┘
```

# F I G. 18

```
                    ┌─────────────────────┐
                    │      INSPECT        │
                    │  COMMON PORTION     │
                    └─────────────────────┘
                              │
                              ▼
   ╱──────────────────────────────────────────────────╲
   │  REPEAT FOR EACH DEFECT THAT IS COMPARISON TARGET  │──S1801
   ╲──────────────────────────────────────────────────╱
                              │
                              ▼
   ┌──────────────────────────────────────────────────┐
   │  ACQUIRE COMMON PORTION THAT OVERLAPS EXPANDED     │──S1802
   │   REGION OF COMPARISON TARGET DEFECT               │
   └──────────────────────────────────────────────────┘
                              │
                              ▼
   ┌──────────────────────────────────────────────────┐
   │        CALCULATE SCORE INDICATING DEGREE OF        │──S1803
   │    MATCH WITH COMPARISON TARGET DEFECT DATA        │
   │  FOR EACH LINE SEGMENT OF REFERENCE DEFECT DATA    │
   └──────────────────────────────────────────────────┘
                              │
                              ▼
   ┌──────────────────────────────────────────────────┐
   │     MAKE LINE SEGMENT OF REFERENCE DEFECT DATA     │──S1804
   │   WHOSE SCORE IS OUTLIER BE DIFFERENCE PORTION     │
   └──────────────────────────────────────────────────┘
                              │
                              ▼
   ┌──────────────────────────────────────────────────┐
   │ SPECIFY LINE SEGMENT OF REFERENCE CHANGE DATA THAT IS │──S1805
   │  DIFFERENCE PORTION BASED ON DEFECT CHARACTERISTICS │
   └──────────────────────────────────────────────────┘
                              │
                              ▼
   ┌──────────────────────────────────────────────────┐
   │      FINAL DETERMINATION ON LINE SEGMENT OF        │──S1806
   │ HOLD LIST BASED ON STATE OF ADJACENT LINE SEGMENT  │
   └──────────────────────────────────────────────────┘
                              │
                              ▼
   ┌──────────────────────────────────────────────────┐
   │       REFLECT LINE SEGMENT DETERMINED              │──S1807
   │      TO BE DIFFERENT PORTION IN TABLE              │
   └──────────────────────────────────────────────────┘
                              │
                              ▼
   ╱──────────────────────────────────────────────────╲
   │  REPEAT FOR EACH DEFECT THAT IS COMPARISON TARGET  │──S1808
   ╲──────────────────────────────────────────────────╱
                              │
                              ▼
                       ┌────────────┐
                       │   RETURN   │
                       └────────────┘
```

# F I G. 19A

# F I G. 19B

# FIG. 20

# F I G. 21A

2100

2101

# F I G. 21B

2102

2103

# F I G. 21C

2104

2105

**REFERENCES CITED IN THE DESCRIPTION**

**Patent documents cited in the description**

- JP 2019211277 A